(19) Europäisches Patentamt
European Patent Office
Office européen des brevets

(11) **EP 4 474 805 A1**

(12) **EUROPEAN PATENT APPLICATION**

(43) Date of publication:
**11.12.2024 Bulletin 2024/50**

(21) Application number: **24175508.1**

(22) Date of filing: **13.05.2024**

(51) International Patent Classification (IPC):
*G01N 23/2251* (2018.01)

(52) Cooperative Patent Classification (CPC):
**G01N 23/2251;** G01N 2223/304; G01N 2223/345

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2023 JP 2023079976
26.04.2024 JP 2024072068**

(71) Applicant: **Jeol Ltd.
Akishima-shi, Tokyo 196-8558 (JP)**

(72) Inventors:
• **OTSUKA, Takeshi
Tokyo, 196-8558 (JP)**
• **NAGATOMO, Kei
Tokyo, 196-8558 (JP)**

(74) Representative: **Boult Wade Tennant LLP
Salisbury Square House
8 Salisbury Square
London EC4Y 8AP (GB)**

(54) **ANALYSIS DEVICE AND ANALYSIS METHOD**

(57) An analysis device (100, 100E, 100F, 100F, 100J, and 100M) includes an electron beam source (2) that irradiates a sample with a charged particle beam, and a detection unit (10, 10B, 10C, 10D, 10E, 10F, 10G, 10N, 10i, and 10K) having a plurality of detection regions (11, 53, and 61) that detects electrons emitted from the sample irradiated with the charged particle beam. The analysis device includes an arithmetic processing unit (104) that performs predetermined arithmetic processing on strength distribution of a plurality of detection signals respectively detected by the plurality of detection regions (11, 53, and 61).

FIG. 1

**Description**

BACKGROUND

Technical Field

The present invention relates to an analysis device and an analysis method.

Related Art

As an example of an analysis device, a scanning electron microscope (SEM) that scans an electron beam and emits the electron beam to a sample is known. In the scanning electron microscope, the electron beam emitted from an electron gun is narrowed by an objective lens and incident on the sample. Then, electrons incident on the sample are scattered in the sample, and some electrons are emitted from the surface of the sample. The amount of emitted electrons reflects a composition and shape of the sample. Therefore, a scanning electron image (SEM image) reflecting the shape and composition of the sample can be obtained by scanning the electron beam on the sample, collecting emitted electrons with a detector, and creating an image based on a signal amount relative to a scanning amount.

Examples of such an analysis device include an analysis device as described in Patent Literature 1. Patent Literature 1 describes a technology including a plurality of detection units that detect charged particles diffracted by a sample when the sample is irradiated with a charged particle beam, and a strength pattern information generation unit that generates strength pattern information based on strengths of a plurality of detection signals output from the plurality of detection units.

Citation List

Patent Literature

Patent Literature 1: JP 2019-121588 A

SUMMARY

However, a signal of electrons emitted from a sample includes various kinds of information regarding the sample. For example, in a backscattered electron signal obtained by a backscattered electron detector, the amount of electrons emitted varies depending on the shape of the sample, an atomic number in the sample, and a difference in density (compositional difference), and such a variation is reflected in contrast of an SEM image. In addition, when the sample has crystallinity, the signal amount also varies depending on the orientation of the crystal, and thus a mixed signal appears in the SEM image. As a result, for the sample with mixed contrast, it is difficult to determine what information is reflected in the SEM image.

Furthermore, there is also a problem that various kinds of information are mixed in the SEM image, which obscures information originally required by a user and hinders accurate observation.

An object of the present invention is to provide an analysis device and an analysis method capable of obtaining desired information from detection information detected by a detection unit in consideration of the above problems.

In order to solve the above problems and achieve the object of the present invention, an analysis device of the present invention includes an irradiation unit configured to irradiate a sample with a primary beam, and a detection unit having a plurality of detection regions that detect a secondary beam emitted or backscattered from the sample irradiated with the primary beam. The analysis device includes an arithmetic processing unit configured to perform predetermined arithmetic processing on strength distribution of a plurality of detection signals respectively detected by the plurality of detection regions.

An analysis method of the present invention includes the following processings (1) to (3).

(1) Processing of irradiating a sample with a primary beam.
(2) Processing of detecting, by a detection unit having a plurality of detection regions, a secondary beam emitted or backscattered from the sample irradiated with the primary beam.
(3) Processing of performing predetermined arithmetic processing on strength distribution of a plurality of detection signals respectively detected by the plurality of detection regions.

With the analysis device and the analysis method of the present invention, desired information can be obtained from the detection information detected by the detection unit.

BRIEF DESCRIPTION OF DRAWINGS

FIG. 1 is a schematic configuration diagram illustrating an electron microscope applied as an example of an analysis device according to a first embodiment;
FIG. 2 is a plan view schematically illustrating a detector of the analysis device according to the first embodiment;
FIG. 3 is a diagram illustrating a relationship between an inclination of a surface of a sample and a detection amount;
FIG. 4 is a diagram illustrating signal strength distribution obtained by a plurality of segments of the detector;
FIG. 5 is a radar chart illustrating strength distribution for a wavenumber 1 (k = 1);
FIG. 6A is an image illustrating an example of a scanning electron microscope (SEM) image according to a related art; FIG. 6B is an SEM image obtained by enhancing contrast of FIG. 6A;
FIG. 7 is an image created by the analysis device according to the first embodiment;
FIG. 8 is a radar chart illustrating strength distribution for a wavenumber 2 (k = 2);
FIG. 9 is a diagram illustrating a relationship between a groove formed in the sample and electrons emitted from the groove;
FIG. 10A is a view illustrating the electrons emitted in a width direction of the groove, and FIG. 10B is a view illustrating the electrons emitted in a length direction of the groove;
FIG. 11 is a schematic view illustrating a structure of a sample S1 to be observed;
FIG. 12 is an image illustrating an example of the SEM image according to the related art;
FIG. 13 is an image created by the analysis device according to the first embodiment;
FIG. 14A is a focused SEM image, and FIG. 14B is an SEM image with out-of-focus blur;
FIG. 15 is an image created by performing discrete Fourier transform on the signal strength distribution and using a signal of a wavenumber 4;
FIG. 16A illustrates an image created based on a strength and phase of the signal of the wavenumber 4, and FIG. 16B illustrates an image created based on a strength of a signal of the wavenumber 2 and the phase of the signal of the wavenumber 4;
FIG. 17 is an image illustrating an example of the SEM image according to the related art;
FIG. 18 is an image obtained by creating the image illustrated in FIG. 17 with a strength of the wavenumber 1;
FIG. 19 is an image created by performing inverse discrete Fourier transform;
FIG. 20 is a diagram illustrating a modification of the detector;
FIG. 21 is a schematic configuration diagram illustrating a detector of an electron microscope according to a second embodiment;
FIG. 22 is a schematic configuration diagram illustrating a modification of the detector of the electron microscope according to the second embodiment;
FIGS. 23A to 23C are diagrams illustrating a behavior of electrons in a sample in which an inclusion is precipitated in a base material of the sample;
FIG. 24 is a view illustrating an image at the time of an extraction operation;
FIG. 25 is a view illustrating an image at the time of the extraction operation;
FIG. 26 is an image obtained by converting a wavenumber-decomposed signal into an SEM image;
FIG. 27 is an image obtained by performing labeling processing on the image illustrated in FIG. 26;
FIG. 28 is an image obtained by extracting the inclusions;
FIG. 29 is an image obtained by second extraction and a specific operation;
FIGS. 30A and 30B are images obtained by extracting the inclusion;
FIG. 31 is a schematic configuration diagram illustrating an analysis device according to a fifth embodiment;
FIG. 32 is a plan view schematically illustrating a detector of the analysis device according to the fifth embodiment;
FIG. 33 is a diagram illustrating another example of a signal strength acquisition method;
FIG. 34 is a graph illustrating signal strength distribution obtained in the example illustrated in FIG. 33;
FIG. 35 is a diagram illustrating another example of the signal strength acquisition method;
FIG. 36 is a schematic configuration diagram illustrating an analysis device according to a sixth embodiment;
FIG. 37 is a plan view schematically illustrating a detector of the analysis device according to the sixth embodiment;
FIG. 38 is a view illustrating a modification of the detector;
FIG. 39 is an SEM image of a shape of a line-and-space on a semiconductor wafer observed obliquely from above;
FIG. 40 is an SEM image of a sample illustrated in FIG. 39 observed from above;
FIG. 41 is a radar chart created based on a signal component of a wavenumber 2 for FIG. 40;
FIGS. 42A and 42B illustrate line-and-space images, FIG. 42A is an SEM image according to the related art, and FIG. 42B is an image obtained by imaging a phase of the wavenumber 2; FIG. 42C is an image brightly illustrating a region having a large phase difference of the wavenumber 2 from an adjacent pixel;

FIG. 43A is an SEM image obtained by observing a surface of the semiconductor wafer, and FIG. 43B is an image created by calculating divergence of a vector of a signal of a wavenumber 1 and using the divergence as a brightness;

FIG. 44 is a schematic configuration diagram illustrating an analysis device according to a ninth embodiment;

FIG. 45 is a schematic configuration diagram illustrating a modification of the analysis device according to the ninth embodiment;

FIG. 46 is a schematic configuration diagram illustrating a modification of the analysis device according to the ninth embodiment;

FIG. 47 is a schematic configuration diagram illustrating an analysis device according to a tenth embodiment;

FIG. 48 is an image created by performing wavenumber decomposition on signal strength distribution and applying a signal of the wavenumber 1 to a hue-saturation-value (HSV) color space;

FIG. 49A is a composition image acquired at an acceleration voltage of 3 kV, and FIG. 49B is a composition image acquired at an acceleration voltage of 15 kV;

FIG. 50A is a backscattered electron image acquired at an acceleration voltage of 15 kV, and FIG. 50B is an image obtained by creating the backscattered electron image illustrated in FIG. 50A with a strength of the wavenumber 1;

FIG. 51 is an image obtained by binarizing the image illustrated in FIG. 50B;

FIG. 52 is an image obtained by performing median filtering processing on the image illustrated in FIG. 51;

FIG. 53 is an image obtained by performing outline extraction processing on the image illustrated in FIG. 52;

FIG. 54 is an image obtained by performing labeling processing on the image illustrated in FIG. 53;

FIG. 55 is an explanatory diagram illustrating a weight of a composition and a direction of a vector;

FIG. 56A illustrates a vector analysis image, FIG. 56B illustrates an image subjected to the labeling processing, and FIG. 56C is an explanatory view illustrating determination of a weight of a particle;

FIGS. 57A to 57C are views illustrating processing of classifying the weight of the particle included in a base material;

FIG. 58 is a schematic configuration diagram illustrating a three-dimensional powder bed fusion additive manufacturing (PBF-AM) apparatus using an analysis device according to an eleventh embodiment; and

FIG. 59 is a plan view of a detector for three-dimensional PBF-AM according to the eleventh embodiment.

DETAILED DESCRIPTION

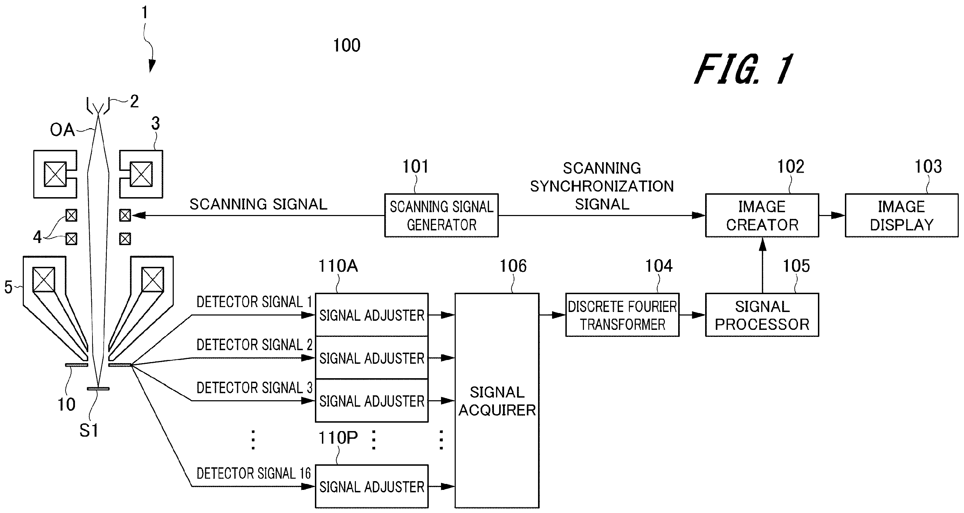

Hereinafter, embodiments of an analysis device of the present invention will be described with reference to FIGS. 1 to 59.

In the drawings, the same members are denoted by the same reference numerals.

1. First Embodiment

1-1. Configuration of Analysis Device

First, an analysis device according to a first embodiment of the present invention (hereinafter, referred to as "present embodiment") will be described with reference to FIG. 1.

FIG. 1 is a schematic configuration diagram illustrating an electron microscope applied as an example of the analysis device of the present embodiment.

The device illustrated in FIG. 1 is an example of the analysis device and is a charged particle beam device that irradiates a sample with an electron beam that is an example of a primary beam. In addition, the device illustrated in FIG. 1 is a scanning electron microscope (SEM) that observes backscattered electrons as an example of a secondary beam. As illustrated in FIG. 1, an electron microscope 100 includes a lens barrel 1, a scanning signal generator 101, an image creator 102, an image display 103, a signal processor 105, a discrete Fourier transformer 104, a signal acquirer 106, and a plurality of signal adjusters 110A to 110P.

The lens barrel 1 includes an electron beam source 2 that is an example of an irradiation unit that emits the electron beam, a focusing lens 3, a scanning deflector 4, an objective lens 5, and an electron detector 10 that is an example of a detection unit.

The electron beam source 2 generates the electron beam. The electron beam source 2 accelerates electrons emitted from a cathode with an anode and emits the electron beam. For example, an electron gun can be used as the electron beam source 2.

The focusing lens 3 and the objective lens 5 are disposed below, that is, downstream of the electron beam source 2 on an optical axis OA of the electron beam. The focusing lens 3 focuses the electron beam emitted from the electron beam source 2. Then, an opening angle of the electron beam emitted from the electron beam source 2 is adjusted by the focusing lens 3.

The objective lens 5 is disposed immediately upstream of a sample S1 below the focusing lens 3. The objective lens 5 is a lens for forming an image of the electron beam on the sample S1. The objective lens 5 includes, for example, a coil and a yoke. In the objective lens 5, magnetic field lines made using the coil are confined in the yoke made of a material having a high magnetic permeability, such as iron, and a notch is formed at a portion of the yoke, so that the magnetic field lines distributed at a high density are leaked onto the optical axis OA. The objective lens 5 is used as a lens for forming an electron probe.

The scanning deflector 4 is disposed between the focusing lens 3 and the objective lens 5. The scanning deflector 4 deflects the electron probe (converged electron beam) formed by the focusing lens 3 and the objective lens 5. The scanning deflector 4 is used to scan the sample S1 with the electron probe. The scanning signal generator 101 is connected to the scanning deflector 4. Then, the scanning deflector 4 is driven based on a scanning signal from the scanning signal generator 101 and deflects the electron beam. Therefore, the sample S1 can be scanned with the electron probe.

In addition, the electron detector 10 is disposed between the objective lens 5 and the sample S1. Here, the electrons passing through the objective lens 5 and incident on the sample S1 are scattered by atoms in the sample S1. The scattered electrons are diffracted at a lattice plane of a crystal. Then, the sample S1 emits the diffracted electrons (backscattered electrons). The electron detector 10 detects the backscattered electrons including the diffracted electrons. Then, an SEM image is obtained by imaging a detection signal detected by the electron detector 10 in synchronization with the scanning signal.

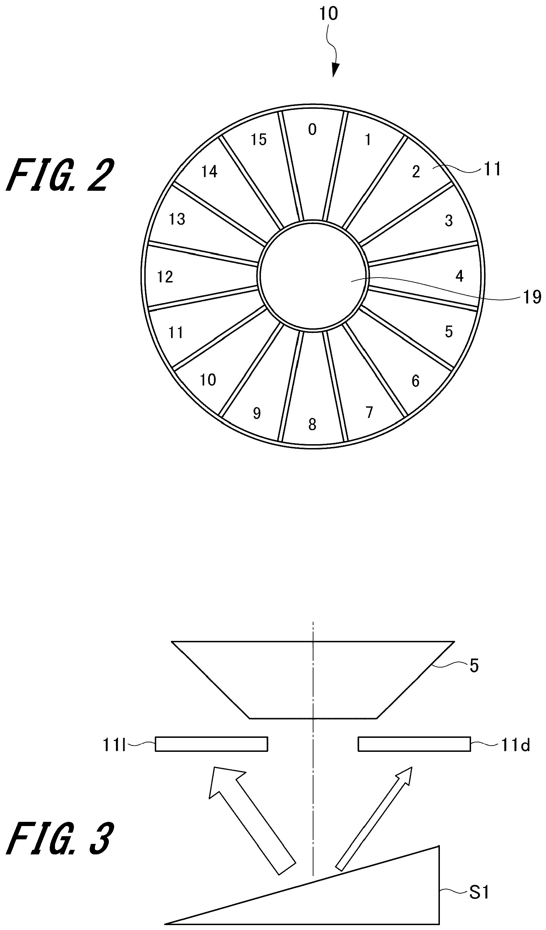

FIG. 2 is a plan view schematically illustrating the electron detector 10 of the present embodiment.

As illustrated in FIG. 2, the electron detector 10 is a segmented detector in which a detection surface for detecting the electrons is segmented into a plurality of segments (detection regions) 11 (16 segments in the present embodiment). The electron detector 10 is formed in a disk shape. In addition, an opening 19 through which the electron beam incident on the sample S1 can pass is formed at the center of the electron detector 10 in a radial direction.

The plurality of segments 11 are arranged rotationally symmetrically with respect to the center of the electron detector 10, that is, the optical axis OA of the electron beam. That is, the plurality of segments 11 are arranged at equal angular intervals in a circumferential direction of the electron detector 10. In addition, it is preferable that the plurality of segments 11 have the same shape and have the same detection characteristics. In such an electron detector 10, in a case where the electrons emitted from the sample S1 have an equal strength in all directions, the plurality of segments 11 each independently detect the electrons and output detector signals 1 to 16 to the signal adjusters 110A to 110P.

In such an electron detector 10, in a case where the electrons emitted from the sample S1 have an equal strength in all directions, the obtained signal strength is the same among the segments 11. In the present embodiment, the number of segments 11 is 16, but the number of segments 11 is not limited thereto, and may be at least four or more.

Although an example in which the electron detector 10 that is a segmented detector is used as the detection unit has been described, the detection unit is not limited thereto. As the detection unit, a plurality of detectors having one detection region (segment) may be arranged in the circumferential direction with respect to the optical axis OA.

The signal adjusters 110A to 110P performs adjustment of an amplification factor, an offset amount, and the like for the detector signals 1 to 16 output from the segments 11 of the electron detector 10. In a case where the electron detector 10 is a semiconductor detector, current signals are output from the electron detector 10. Therefore, the signal adjusters 110A to 110P convert the current signals into voltage signals with I-V converters and amplify the voltage signals. Then, the signals adjusted by the signal adjusters 110A to 110P are output to the signal acquirer 106.

The signal acquirer 106 acquires the amplified detection signals. For example, the signal acquirer 106 acquires the detector signals 1 to 16 output from the 16 segments 11 in the same period. The signal acquirer 106 converts the amplified detector signals 1 to 16 into a digital signal. The converted digital signal is output to the discrete Fourier transformer 104.

The same period referred to herein is a signal with which electrons emitted at the same scanning position during scanning of the electron beam are detected. Therefore, when the electron beam is at a certain position, a signal of a first segment 11a is acquired, and then a signal of a second segment 11b is acquired. Then, a method in which the signals are not acquired at the same moment, for example, the signals are acquired up to a sixteenth segment 11p, and then the electron beam is moved to the next position, is also applicable.

The discrete Fourier transformer 104 that is an example of an arithmetic processing unit performs arithmetic processing on the plurality of acquired detection signals. The processing performed by the discrete Fourier transformer 104 will be described below. The discrete Fourier transformer 104 outputs a signal subjected to predetermined arithmetic processing to the signal processor 105.

In addition, the signal acquirer 106 or the discrete Fourier transformer 104 can calculate a signal amount for a state (zero point) in which the sample S1 is not irradiated with the electron beam. For example, when the offset amounts are adjusted by the signal adjusters 110A to 110P for the zero point, the signal amount for the zero point changes, and the signal acquirer 106 or the discrete Fourier transformer 104 calculates the signal amount for the zero point according to an adjustment amount of the offset amount.

In addition, in a case where the signals are amplified beyond an output range of amplifiers of the signal adjusters 110A to 110P, when a signal exceeding an input range of the signal acquirer 106 is output from the amplifier, the signal is saturated. In this state, a correct signal amount cannot be measured, and thus, information of the sample S1 cannot be extracted well. Therefore, it is preferable to provide a function of determining whether or not the acquired signal amount is saturated, and adjusting the signal amount so as not to be saturated using the signal adjusters 110A to 110P by a user, or automatically adjusting the signal amount by the signal adjusters 110A to 110P or the signal acquirer 106. Therefore, the signal adjusters 110A to 110P or the signal acquirer 106 not only calculates the signal amount for the zero point but also determines whether the acquired signal is not saturated.

The signal processor 105 performs signal processing on the signal subjected to the predetermined arithmetic processing. Then, the signal processor 105 outputs the processed signal to the image creator 102.

The signal (detection signal) acquired from the signal processor 105 is input to the image creator 102, and a scanning synchronization signal is input from the scanning signal generator 101. Then, the image creator 102 creates an image based on the processed signal (detection signal) and the scanning synchronization signal. Specifically, the image creator 102 receives the scanning signal from the scanning signal generator 101 and acquires information regarding an incident position of the electron beam in the sample S1. Then, the image creator 102 creates an image by associating the processed signal (detection signal) with the information regarding the incident position of the electron beam. The image creator 102 also outputs the created image to the image display 103.

The image display 103 is implemented by, for example, a display such as a liquid crystal display (LCD) or an organic electro luminescence display (ELD). Then, the image display 103 displays the image input from the image creator 102.

The image creator 102, the image display 103, the signal processor 105, and the discrete Fourier transformer 104 include, for example, a central processing unit (CPU), a read only memory (ROM), a random access memory (RAM), and a nonvolatile storage that are connected to a bus.

The CPU reads a program code of software for implementing each function according to the present embodiment from the ROM, loads the program code in the RAM, and executes the program code. A control processor may include a processing device such as a micro-processing unit (MPU) instead of the CPU. Variables, parameters, and the like generated during arithmetic processing are temporarily written to the RAM.

As the nonvolatile storage, for example, a hard disk drive (HDD), a solid state drive (SSD), a flexible disk, an optical disk, a magneto-optical disk, a CD-ROM, a CD-R, a magnetic tape, a nonvolatile memory card, or the like can be used. In addition to an operating system (OS) and various parameters, a program for causing the control processor to function, and the like are recorded in the nonvolatile storage. The program may be stored in the ROM.

The program is stored in the form of a computer-readable program code, and the CPU sequentially executes operations according to the program code. That is, the ROM or the nonvolatile storage is used as an example of a computer-readable non-transitory recording medium storing a program to be executed by a computer.

1-2.Processing Operation of Discrete Fourier Transformer

Next, a processing operation of the discrete Fourier transformer 104 will be described with reference to FIGS. 3 to 5.

Here, in order to distinguish the plurality of segments 11 in describing the processing operation of the discrete Fourier transformer 104, each segment 11 is assigned with a number n as illustrated in FIG. 2. Here, when the electron detector 10 is viewed from an electron beam source 2 side, the number of the segment 11 located at a 12 o'clock position is 0, and the number n is assigned clockwise around the optical axis OA. Since the segment 11 faces the sample S1, the number of the segment 11 viewed from the sample S1 is assigned counterclockwise. In the present embodiment, the number of segments 11 is 16, and thus, the number n is 0 to 15. The signal strength obtained from each segment 11 is represented as f(n).

FIG. 3 is a diagram illustrating a relationship between an inclination of the surface of the sample S1 and a detection amount.

As illustrated in FIG. 3, a case where the sample S1 having a flat surface is installed not horizontally but obliquely will be described. In this case, an emission amount of the electrons backscattered by the surface of the sample S1 (hereinafter, referred to as backscattered electrons) is maximized in a mirror surface direction with respect to an incident direction of the electron beam. Therefore, in the arrangement as illustrated in FIG. 3, the signal strength is maximized at a twelfth segment 111 (the number is "12") disposed in a direction in which the sample S1 is inclined. Then, the signal strength is minimized at a fourth segment 11d (the number is "4") disposed diagonally to the twelfth segment 111.

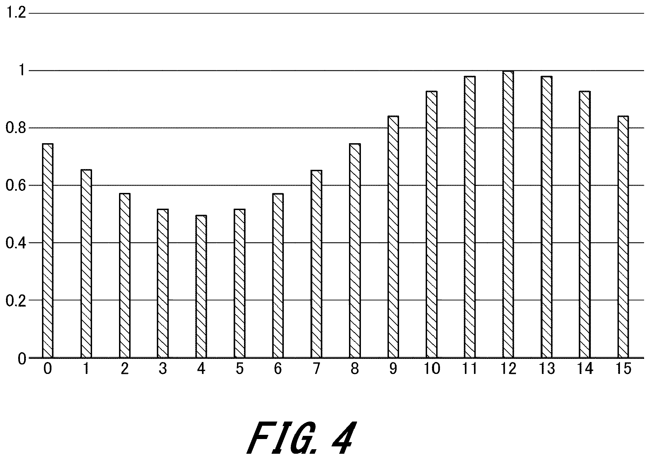

FIG. 4 is a diagram illustrating signal strength distribution obtained by the plurality of segments 11 of the electron detector 10. In FIG. 4, the horizontal axis represents the number n of the segment 11, and the vertical axis represents the signal strength f(n).

As illustrated in FIG. 4, in a case where the surface of the sample S1 is inclined with respect to the horizontal, the distribution of the signal strength f(n) obtained from the surface of the sample S1 becomes distribution in which an offset is applied to a sine wave. As described above, when the signals are arranged in the order of the numbers of the plurality of segments 11, the signal strength f(n) obtained at each segment can be replaced with a function when n changes from 0 to 15, that is, a wave. Here, since n is the number of each of the plurality of segments 11, a value (signal strength) between number 1 and number 2, for example, a value of number 1.5, cannot be obtained. Therefore, the signal strength f(n) becomes a discrete wave.

Further, the plurality of segments 11 of the electron detector 10 are arranged side by side in the circumferential direction, as illustrated in FIG. 2. Therefore, the number n sequentially increases in the circumferential direction and returns to number 0 after number 15. In addition, a frequency (also referred to as an angular frequency and hereinafter referred to as a wavenumber) of a wave during one cycle can be rephrased as a frequency. As a result, discrete Fourier transform can be applied to the distribution of the signal strength f(n) obtained by the electron detector 10 of the present embodiment.

Here, the discrete Fourier transform is defined as in the following Formula 1.

[Formula 1]

$$F(k) = \sum_{n=0}^{N-1} f(n) \, exp(-i\frac{2\pi kn}{N})$$

N in Formula 1 is the number of segments 11, and is 16 in the present embodiment. Then, F(k) obtained by Formula 1 is a signal of the wavenumber corresponding to k, and the signal strength f(n) can be decomposed for each wavenumber. F(k) is a complex number, and the strength of the wavenumber signal can be obtained by calculating an absolute value thereof. Further, a phase of the wavenumber signal is obtained by calculating an angle thereof. Here, k is an integer from 0 to N-1, and k = 0 is a signal of a wavenumber 0. Furthermore, the wavenumber becomes N/2, which is the maximum value, at k = N/2, and thereafter, the wavenumber decreases with an increase in k and becomes a signal of a wavenumber 1 at k = N-1.

In commonly used Fourier transform, data acquired in real time is called data in real space. On the other hand, Fourier transformed data is called data in a Fourier space (alternatively, a frequency space or an inverse space). In the following description, a coordinate system in which f(n) is obtained with respect to n is referred to as a real space, and a coordinate system in which F(k) is obtained with respect to k is referred to as a wavenumber space.

Furthermore, the result F(k) of the wavenumber space obtained by the discrete Fourier transform can be returned to the signal distribution f(n) of the real space by inverse discrete Fourier transform. A formula of the inverse discrete Fourier transform is as the following Formula 2.

[Formula 2]

$$f(n) = \frac{1}{N}\sum_{k=0}^{N-1} F(k) \, exp(-i\frac{2\pi kn}{N})$$

For Formula 2 above, the discrete Fourier transformer 104 performs filtering processing or the like on F(k) in the wavenumber space to perform the filtering processing on a specific wavenumber signal. Then, by performing the inverse discrete Fourier transform to return F(k) to the real space, it is possible to obtain strength distribution f'(n) obtained by performing the filtering processing on a specific frequency component for f(n).

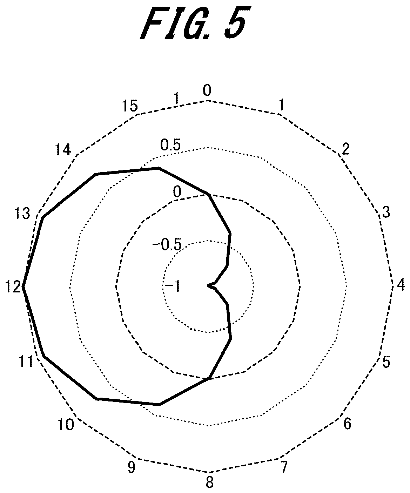

FIG. 5 is a radar chart illustrating strength distribution for the wavenumber 1 (k = 1).

Here, as an example of a filtering processing method, when the inverse discrete Fourier transform is performed with a strength other than a necessary wavenumber component of the signal F(k) set to 0, distribution obtained by extracting a specific wavenumber component is obtained.

For example, when the discrete Fourier transform is performed on the strength distribution illustrated in FIG. 4, and the obtained result, the signal F(k), is subjected to inverse transform with F(0) = 0, signal strength distribution of the wavenumber 1 obtained by excluding an average strength of all the segments as illustrated in FIG. 5 is obtained. This is a state in which only a signal strength difference caused by the inclination of the surface is extracted.

As described above, with the electron microscope 100 of the present embodiment, the discrete Fourier transformer 104 performs, as the predetermined arithmetic processing, the discrete Fourier transform on the signals obtained by the plurality of segments 11 of the electron detector 10. Furthermore, the discrete Fourier transformer 104 further performs the inverse discrete Fourier transform on the result of the discrete Fourier transform by performing the filtering processing or the like. As a result, the discrete Fourier transformer 104 performs the predetermined arithmetic processing on the detection signals, so that the information regarding the sample S1 can be extracted.

Wavenumber-Decomposed Signal

As described above, the distribution of the signal strength f(n) is subjected to the discrete Fourier transform by the discrete Fourier transformer 104, thereby being subjected to wavenumber decomposition into signals of the wavenumbers of 0 to N/2. Here, from the wavenumber-decomposed signal F(k), the strength and phase of the wavenumber signal are obtained, and different features are reflected for each wavenumber.

For example, the wavenumber 0 (k = 0) is a signal component obtained by adding all the segments 11.

This mainly represents a signal strength due to compositional Z contrast and channeling contrast in a crystalline sample. The channeling contrast will be described below.

On the other hand, the signal strength of the wavenumber 1 (k = 1 and k = 15) means that the signal strength oscillates once during one cycle of the plurality of segments 11. In the signal strength of the wavenumber 1, there is a change in strength for one cycle. Such strength distribution can be expressed by a radar chart as illustrated in FIG. 5. As illustrated in FIG. 5, it can be seen that the strength distribution is biased in one direction. This is the strength distribution when the surface of the sample S1 is inclined as described above. As described above, the state of the inclination of the surface in the sample S1 can be determined from the signal of the wavenumber 1.

For example, the discrete Fourier transformer 104 performs the discrete Fourier transform on the signal strength f(n) to calculate F(1) and F(15). Then, the signal strength of the wavenumber 1 is calculated from the absolute value, and the phase of the signal of the wavenumber 1 is calculated from the angle. The signal strength of the wavenumber 1 corresponds to the magnitude of the inclination, and the phase of the signal of the wavenumber 1 corresponds to the direction of the inclination. As a result, the magnitude and direction of the inclination of the surface of the sample S1 at the incident position of the electron beam can be grasped from the signal of the wavenumber 1.

1-3. Display Example Using Wavenumber Signal Wavenumber 1

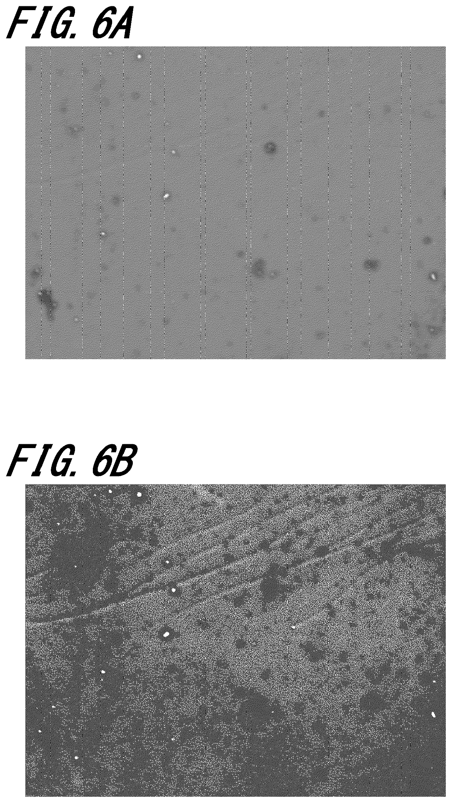

Next, a display example of an image to be displayed on the image display 103 using the above-described wavenumber signal will be described with reference to FIGS. 6A to 7.

As a display example of the image to be displayed on the image display 103, a method of displaying a color image of a hue-saturation-value (HSV) color space will be described. The HSV color space is a method in which H represents a hue, S represents a saturation, and V represents a value, and a color is expressed by these three elements.

For the hue, a circular color map called a color circle is used. The hue expresses the type of a color in an angular range of 0° to 360°, for example. The value is expressed as 0% to 100%, and 0% indicates a dark state and expressed in black. Then, 100% indicates a bright state, and a color designated by the hue is expressed brightly. Similarly, the saturation is expressed as 0% to 100%. A gray color according to the value is expressed at 0%, and a vivid color is expressed at 100%. Here, the saturation S is always 100.

Next, SEM image creation based on the wavenumber-decomposed signal using the above-described HSV color space will be described.

In general SEM image creation, the electrons generated from the sample are detected while scanning the electron beam on the sample S1, and the image is created with coordinates of the image as a scanning position and a brightness of a pixel as a signal detection amount.

On the other hand, in the SEM image creation using the HSV color space, the brightness and hue of the HSV color space are used as pixel data, and the image is created with the value and the hue as an absolute value and a deflection angle of the signal, respectively.

Specifically, a certain point on the sample S1 is irradiated with the electron beam, and the signals from the plurality of segments 11 are acquired using the electron detector 10. Next, the discrete Fourier transformer 104 performs the discrete Fourier transform on the obtained signal distribution f(n) with k = 1 to obtain the discrete Fourier transform result F(1) of the wavenumber 1.

Here, since the obtained value is a complex number, the absolute value and the deflection angle are calculated. The absolute value is the strength for the signal of the wavenumber 1, and the deflection angle is the phase of the signal. Therefore, for a pixel corresponding to the scanning position of the electron beam, the value is the absolute value of F(1), and the hue is the deflection angle of F(1). Such calculation is performed while scanning the electron beam, so that the brightness and the hue for each incident position of the electron beam are obtained to create the SEM image.

In the SEM image thus obtained, a region where an inclination amount of the surface is large is displayed brightly. In addition, since the hue corresponds to the deflection angle, the color is displayed differently depending on the direction of the inclination. Further, since the SEM image does not include a signal other than the wavenumber 1, it is possible to obtain an image specifically expressed by the shape of the surface. This makes it possible to clearly visually recognize the magnitude of the inclination and the direction of the inclination. Further, the color circle may be shown in the obtained SEM image or around the image. As a result, a color corresponding to an angular direction of the color circle becomes the direction of the inclination, the direction of the inclination of the surface of the sample can be easily determined from the image.

In addition, in the scanning electron microscope, the orientation of the sample S1 with respect to the orientation of the image changes by changing the scanning direction. Therefore, in a general scanning electron microscope, the scanning direction can be freely set in such a way that the user can obtain an image of a desired orientation of the sample S1. Since the hue corresponds to the deflection angle, the orientation of the color circle also changes with respect to the scanning direction.

Here, the orientation of the sample S1 with respect to the orientation of the image changes depending on the scanning direction. However, the sample S1 is held on a stage, and the sample S1 itself does not move. Therefore, a positional relationship between the direction of the inclination of the surface and each segment 11 does not change.

On the other hand, the color circle displayed to identify the direction of the inclination corresponds to the phase of the wavenumber signal. The phase is set based on the segment 11 with number "0". Therefore, when the scanning direction changes, the direction of the segment 11 with number "0" as a reference with respect to the orientation of the image also changes. That is, since a reference direction of the phase also changes depending on the scanning direction, it is necessary to change the orientation of the color circle accordingly.

FIGS. 6A and 6B are images illustrating an example of an SEM image according to a related art. FIG. 6B is an SEM image obtained by enhancing contrast of FIG. 6A. In the observed sample S1, a stepped unevenness is formed on the surface, and various kinds of dust are attached.

When such a sample S1 is observed with a backscattered electron signal by an annular backscattered electron detector, the SEM image as illustrated in FIG. 6A can be obtained. The unevenness formed on the surface of the sample S1 is an observation target that is difficult to see. In a normal SEM image, it can be seen that contrast due to a compositional difference of dust is enhanced, and contrast of the unevenness is relatively weakened as illustrated in FIG. 6A.

When automatic brightness adjustment for the sample S1 is performed as illustrated in FIG. 6A, the brightness adjustment is performed according to the enhanced contrast. Therefore, in a case of information to be focused on, it is necessary to manually adjust the brightness and contrast in order to highlight the unevenness of the surface of the sample S1. Furthermore, as illustrated in FIG. 6B, when the contrast is increased to highlight the unevenness, an appropriate brightness cannot be obtained due to some unevenness due to the contrast of the dust, and the shape becomes difficult to see. Further, as illustrated in FIG. 6B, the stepped unevenness formed on the surface of the sample S1 is hidden by the dust.

Therefore, it is difficult to observe the surface of the sample S1 in the SEM image according to the related art.

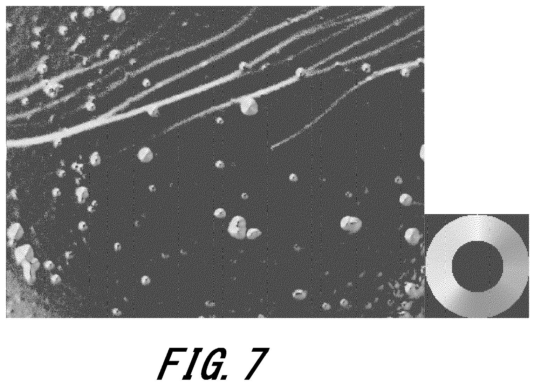

FIG. 7 is an image created by the electron microscope 100 of the present embodiment.

On the other hand, with the electron microscope 100 of the present embodiment, the discrete Fourier transformer 104 performs wavenumber decomposition of the obtained signal strength distribution. Then, the image creator 102 applies the signal of the wavenumber 1 to the HSV color space to create an image. As a result, an image as illustrated in FIG. 7 can be obtained.

The shape of the dust is visible as illustrated in FIG. 7 because it can be said that the dust is also an unevenness of the surface of the sample S1, but the unevenness of the surface of the sample S1 is also reliably highlighted. This makes it easy to observe the stepped unevenness formed on the sample S1. In addition, since a signal component (the wavenumber 1) mainly including unevenness information is used, it is possible to suppress the stepped unevenness from being hidden by the contrast of the dust as illustrated in FIG. 6B, and the shape of the unevenness can be easily seen. Furthermore, a clear unevenness image can be obtained only by automatically adjusting the brightness and contrast.

Further, the unevenness of the surface of the sample S1, which cannot be confirmed in the images of FIGS. 6A and 6B, can be confirmed in the image illustrated in FIG. 7. In this way, by extracting only the information of the unevenness with the signal of the wavenumber 1, it is possible to extract information hidden in the SEM image according to the related art.

Furthermore, as illustrated in FIG. 7, not only the size of the unevenness of the sample S1 but also the direction of the inclination of the unevenness can be clearly visible by displaying the color circle together with the created image.

Wavenumber 2

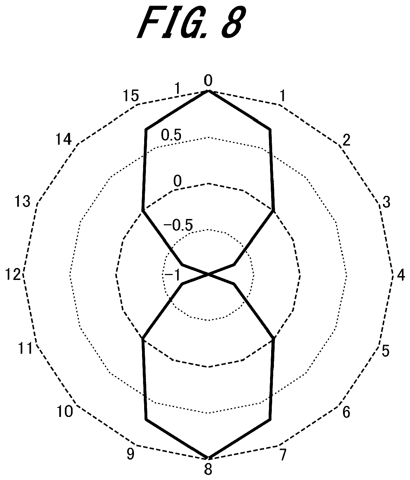

Next, an image obtained by a signal of a wavenumber 2 will be described with reference to FIGS. 8 to 13.

FIG. 8 is a radar chart illustrating strength distribution for the wavenumber 2 (k = 2).

As illustrated in FIG. 8, the signal of the wavenumber 2 has distribution in which the segments 11 diagonally facing each other have the same strength. Such strength distribution is considered to be observed when a groove is formed on the surface of the sample S1.

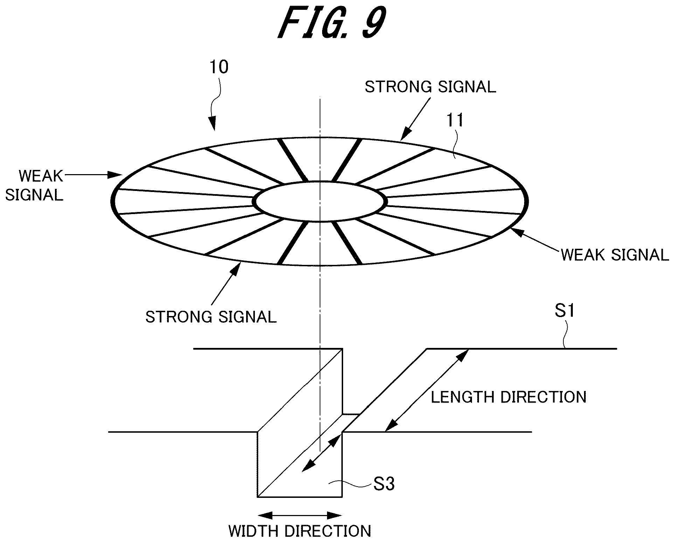

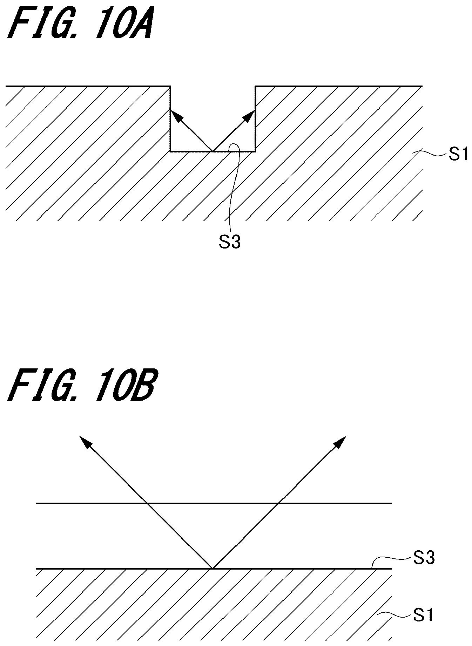

FIG. 9 is a diagram illustrating a relationship between a groove S3 formed in the sample S1 and electrons emitted from the groove S3. FIG. 10A is a view illustrating the electrons emitted in a width direction of the groove S3, and FIG. 10B is a view illustrating the electrons emitted in a length direction of the groove S3.

Here, as illustrated in FIG. 9, a direction orthogonal to a direction in which the groove S3 extends is referred to as the width direction, and a direction in which the groove S3 extends is referred to as the length direction. As illustrated in FIG. 10A, among the electrons emitted from a bottom surface of the groove S3, the electrons emitted in the width direction of the groove S3 are incident on walls of the groove S3. Therefore, the electrons emitted in the width direction of the groove S3 hardly reach the electron detector 10. As a result, as illustrated in FIG. 9, the signal strength of the segment 11 that is arranged substantially parallel to the width direction of the groove S3 among the plurality of segments 11 of the electron detector 10 becomes low (weak).

On the other hand, as illustrated in FIG. 10B, among the electrons emitted from the bottom surface of the groove S3, the electrons emitted in the length direction of the groove S3 are not blocked by the walls of the groove S3. Therefore, the electrons emitted in the length direction of the groove S3 easily reach the electron detector 10. As a result, as illustrated in FIG. 9, the signal strength of the segment 11 that is arranged substantially parallel to the length direction of the groove S3 among the plurality of segments 11 of the electron detector 10 becomes high (strong).

In addition, if the orientation of the groove S3 changes, the segment 11 that can obtain a strong signal also changes accordingly. Such a change is reflected in the phase of the signal of the wavenumber 2. As described above, in a case of the signal of the wavenumber 2, the strength increases due to the groove shape on the surface of the sample S1, and the orientation of the groove is reflected in the phase. Therefore, if an image is created using the signal component, the structure of the groove S3 formed on the surface of the sample S1 can be easily determined.

As for the phase, the signal of the wavenumber 2 overlaps original distribution when rotated by 180°. Therefore, when the phase advances by 2n, the phase corresponds to 0° to 180° in the actual image. Therefore, in a case of the wavenumber 1, the color circle expressing the type of the color in the angular range of 0° to 360° is used as an index for determining the direction of the inclination. On the other hand, in a case of the wavenumber 2, it is preferable to use a semicircular color circle or a color circle in which one of two semicircles is rotated by 180° and the semicircles overlap each other.

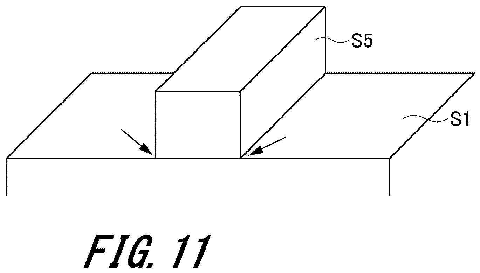

Next, an example of an image created with the wavenumber 2 will be described with reference to FIGS. 11 to 13.

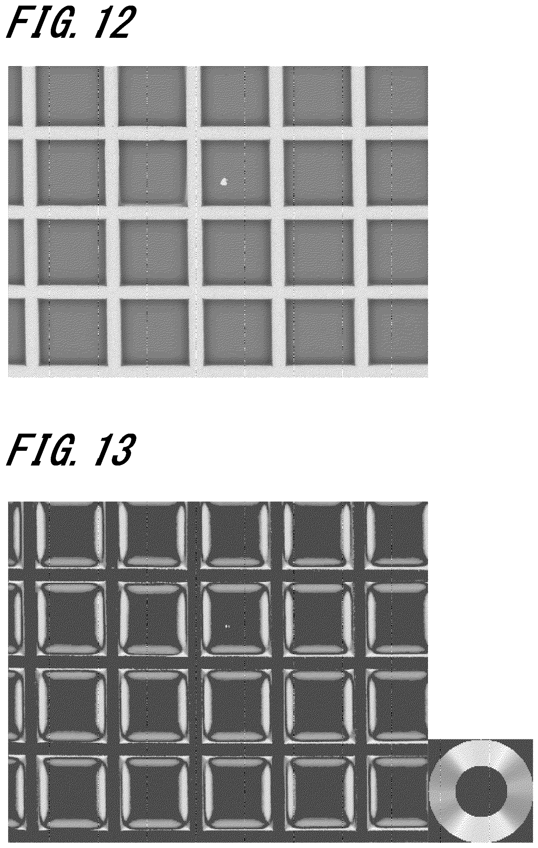

FIG. 11 is a schematic view illustrating a structure of the sample S1 to be observed, and FIG. 12 is an image illustrating an example of the SEM image according to the related art. FIG. 13 is an image created by the electron microscope 100 of the present embodiment.

As illustrated in FIG. 11, in the sample S1 to be observed, a metal deposit S5 is formed in a mesh shape on a silicon substrate. FIG. 12 is an SEM image created based on a signal amount obtained by adding the signals of all the segments 11. A bright portion illustrated in FIG. 12 corresponds to the metal deposit S5, and a dark portion illustrated in FIG. 12 corresponds to the silicon substrate.

Meanwhile, the image illustrated in FIG. 13 is an image created by the image creator 102 as data of pixels in the HSV color space based on information regarding the wavenumber 2 obtained by performing the discrete Fourier transform on the signal strength distribution by the discrete Fourier transformer 104, and the strength and the phase calculated for the signal. The vicinity of a boundary between the metal deposit S5 and the substrate (an arrow portion illustrated in FIG. 11) has a shape close to the shape of the groove. Therefore, the signal strength of the wavenumber 2 is high in the region, and the region is displayed brightly as illustrated in FIG. 13.

In addition, in the vicinity of a longitudinal line of the metal deposit S5, a signal in a longitudinal direction tends to be strong. Similarly, in the vicinity of a lateral line of the metal deposit S5, a signal in a lateral direction tends to be strong. This difference appears due to a difference in phase. Therefore, as illustrated in FIG. 13, the vicinity of the longitudinal line of the metal deposit S5 is colored in green, for example, and the vicinity of the lateral line is colored in purple, for example. Top and bottom portions of the color circle are green and left and right portion of the color circle are purple, which means that the signal is strong in each direction.

As described above, the signal of the wavenumber 2 includes information regarding the shape of the groove, and the SEM image is created using the information, whereby the information regarding the shape of the groove can be visualized. Similarly, also for signals of wavenumbers of 3 or more, strength distributions corresponding to the respective signals are obtained, and the signals have strengths and phases reflecting the shape of the sample.

Here, in a case where the sample S1 is made of a plurality of materials and efficiency in generating the backscattered electron signal is greatly different, the strength of the result of the wavenumber decomposition is also affected. As a result, in a material having low efficiency in generating the backscattered electrons, the signal of the structure of the surface described above also becomes relatively weak. As a result, when compared with a material having high efficiency in generating the backscattered electrons, an unevenness of the material having low efficiency in generating the backscattered electrons appear smaller.

In order to avoid an adverse effect caused by the difference in efficiency in generating the backscattered electrons, the wavenumber signal may be normalized. For example, the wavenumber 0 (k = 0) is a signal component obtained by adding all the segments 11 and is thus the total backscattered electron strength at which the signal amount of the backscattered electrons is detected. Therefore, the signal components of k = 1 to N-1 obtained by the wavenumber decomposition are divided by the strength of the signal component of k = 0. As a result, a signal normalized using the signal strength can be obtained. The normalized signal component of the wavenumber thus obtained is not affected by the difference in efficiency in generating the backscattered electrons. As a result, it is possible to compare shapes of samples having greatly different efficiency in generating the backscattered electron signal.

1-4. Out-of-Focus Blur of Electron Beam

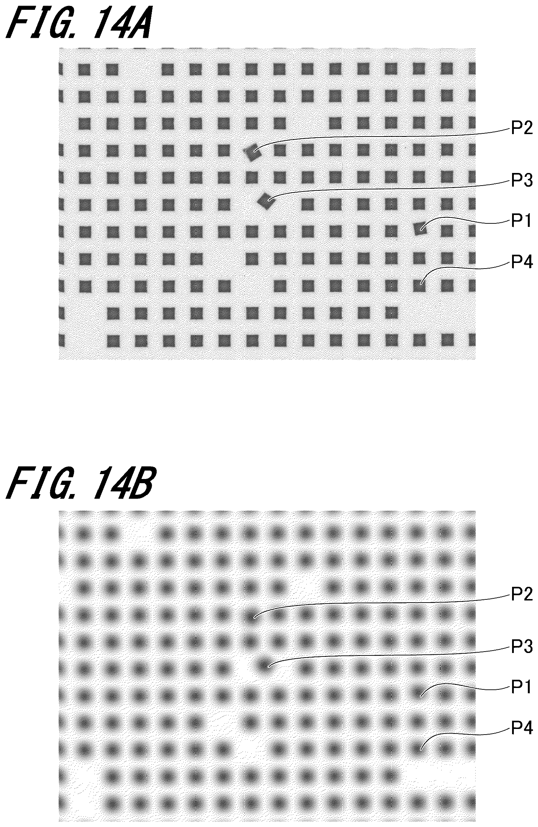

A shape determination example when out-of-focus blur of the electron beam occurs will be described with reference to FIGS. 14 to 15.

The signal strength distribution reflects the shape of the sample even in a state where a focal point of the electron beam incident on the sample S1 is not aligned with the surface of the sample S1 (so-called out-of-focus blur state). Next, an example thereof will be described.

Basically, in the SEM image, a spatial resolution is increased by sufficiently narrowing a beam diameter of the electron beam for the structure of the surface of the sample S1 to highlight the contrast due to the shape and composition. Here, in a case where the electron beam with which the sample S1 is irradiated is not sufficiently narrowed and the beam diameter of the electron beam is large for the shape of a hole formed on the surface, the SEM image according to the related art has a problem that the image is blurred and the shape cannot be determined.

Even in a case where the out-of-focus blur occurs, the signal obtained by the electron detector 10 has signal strength distribution reflecting the shape of the surface of the sample S1. Therefore, as the signal distribution of the electron detector 10 is subjected to the wavenumber decomposition, the information regarding the shape of the sample S1 can be acquired even when the out-of-focus blur occurs.

Here, an example of acquiring the shape of a rectangular hole formed on the surface of the sample S1 will be described.

FIG. 14A is a focused SEM image, and FIG. 14B is an SEM image with out-of-focus blur.

The sample S1 observed in FIGS. 14A and 14B has a plurality of quadrangular holes formed on the surface. As illustrated in FIG. 14A, the plurality of holes are arranged side by side in the longitudinal direction and the lateral direction in a two-dimensional array. In addition, sides of many holes P4 are arranged substantially parallel to a direction in which the plurality of holes are arranged. On the other hand, orientations of sides of holes P1 to P3 are different from orientations of the sides of the holes P4.

On the other hand, in the SEM image with the out-of-focus blur, both the holes P1 to P3 whose orientations of the sides are inclined and the holes P4 whose orientations of the sides are substantially parallel to the direction in which the holes P4 are arranged are displayed as round holes as illustrated in FIG. 14B. As a result, it is difficult to determine the orientation and shape of the hole.

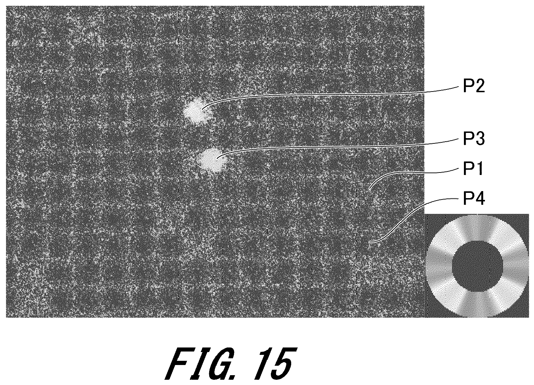

FIG. 15 is an image created by performing the discrete Fourier transform on the signal strength distribution and using a signal of a wavenumber 4.

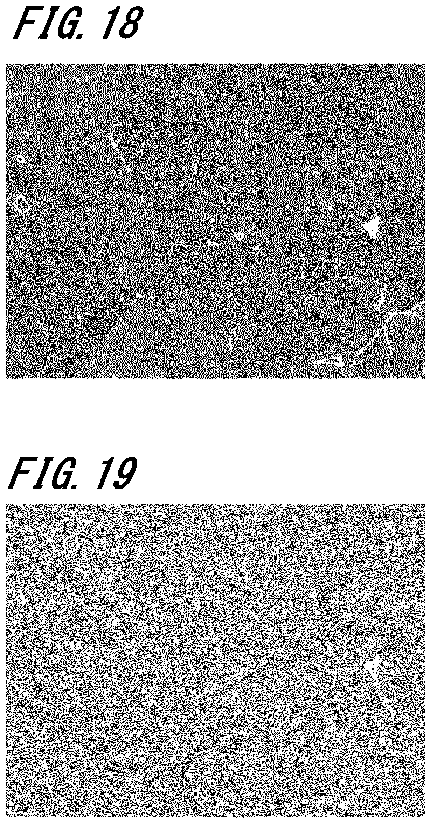

As illustrated in FIG. 15, with this image, an image having a different color arrangement depending on the orientation of the hole can be obtained. In an image illustrated in FIG. 19, the holes P4 whose orientations of the sides are substantially parallel to the direction in which the holes P4 are arranged in FIG. 14A is displayed in dark purple, for example. The holes P1 to P3 are displayed in a color different from that of the holes P4. As a result, even though the shape cannot be confirmed from the image, it can be determined that the orientations of the holes are different.

In addition, the difference in orientation of the side of the hole can be obtained from a phase difference. Next, a relationship between the orientation of the hole and the color of the obtained image will be described.

When a signal from a quadrangular hole is viewed with the signal of the wavenumber 4, a phase for a direction of the hole varies depending on whether a signal generated from a bottom surface of the hole is strong or a signal generated near a wall surface is strong. In the present embodiment, since the hole is relatively small and many electrons are generated near the wall surface, the signal generated near the wall surface is mainly used. In this case, the strength increases in a direction along one side of the hole and in a direction perpendicular thereto.

In the example illustrated in FIG. 14A, inclinations of the sides of the hole P1 with respect to the orientation of the hole P4 are the largest followed by the hole P2 and then the hole P3. In the image illustrated in FIG. 15, the color of the hole P4 is purple, the hole P1 is red, the hole P2 is yellow, and the hole P3 is green. Here, in a color circle for the wavenumber 4, purple is positioned in a direction in which the plurality of holes are aligned, and red, yellow, and green are positioned in this order in a counterclockwise direction, corresponding to the inclinations.

The hole P3 is inclined by about 45° with respect to the hole P4. An angle relationship between purple and green in the color circle is about 45° in a real image, which is substantially the same as the inclinations of the hole P3 and the hole P4. As described above, with the electron microscope 100 of the present embodiment, the orientation of the hole is reflected in the signal of the wavenumber 4, and the information regarding the shape can be acquired even when the out-of-focus blur occurs.

As described above, since the information regarding the shape can be acquired without sufficiently narrowing the electron beam, for example, even an SEM in which the beam diameter cannot be sufficiently narrowed can be used for inspection of a shape finer than the beam diameter. As a result, the cost of an inspection apparatus can be reduced.

1-5. Combinations of Different Wavenumbers

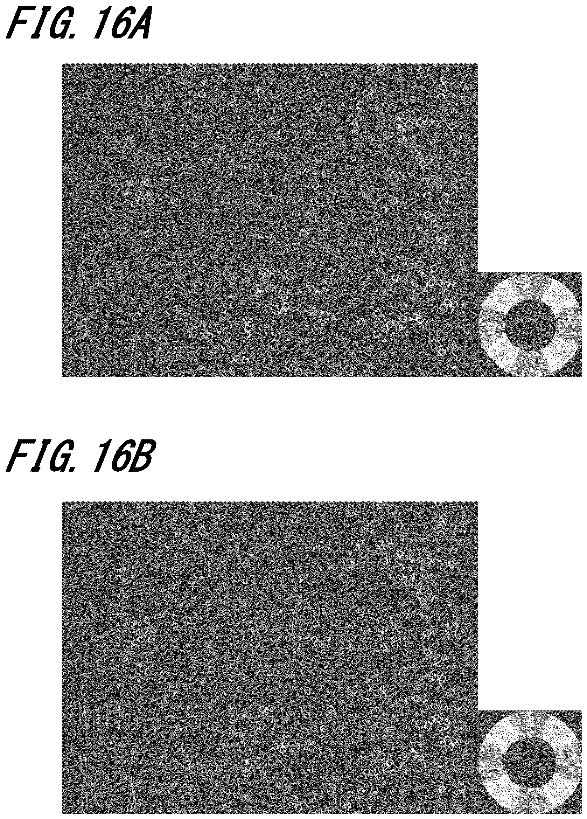

Combinations of different wavenumbers will be described with reference to FIGS. 16A and 16B.

FIG. 16A illustrates an image created based on the strength and phase of the signal of the wavenumber 4, and FIG. 16B illustrates an image created based on the strength of the signal of the wavenumber 2 and the phase of the signal of the wavenumber 4.

As described above, the orientation of the rectangular hole can be determined by using the signal of the wavenumber 4. Such determination can be used, for example, to inspect the orientation of the rectangular hole. In this case, an image is created with the signal of the wavenumber 4, and the inclination is determined based on the color of the quadrangular hole. Here, a signal of a high wavenumber tends to be low in strength. Therefore, it may be difficult to confirm the shape by confirming an image created with a signal of a high wavenumber.

As illustrated in FIG. 16A, in a case of an image created only based on the strength and phase of the signal of the wavenumber 4, the orientation of the hole can be determined, but the image has a large amount of noise as a whole. Therefore, an image is created by combining signals of different wavenumbers. In the example illustrated in FIG. 16B, the strength of the wavenumber 2 is used as the brightness of the image, and the phase of the wavenumber 4 is used as the hue of the image. Then, as illustrated in FIG. 16B, it can be seen that the image created by combining signals of different wavenumbers is easier to determine the orientation of the hole than the image illustrated in FIG. 16A. As described above, in the electron microscope 100 of the present embodiment, an image may be created by combining signals of different wavenumbers.

As described above, with the electron microscope 100 of the present embodiment, the discrete Fourier transformer 104 performs the discrete Fourier transform on the signal detected by the electron detector 10, so that decomposition into signals of the wavenumbers of 0 to N/2 can be performed. As a result, only desired information can be separated from the detection information, so that information desired by the user can be easily obtained. As a result, by selecting and combining the wavenumbers, only information desired by the user can be extracted from various pieces of information and displayed on the image display, and accuracy of sample analysis and observation can be improved.

Furthermore, it is possible to remove a signal component having information other than information that the user wants to pay attention to. Therefore, when the brightness and the contrast are automatically adjusted, the brightness can be appropriately adjusted for the contrast of the information that the user pays attention to.

Furthermore, various pieces of information can be extracted from the detection information acquired by scanning performed once. As a result, the number of times the sample is irradiated with the electron beam can be reduced, damage to the sample by the electron beam can be suppressed, and the sample can be analyzed and observed from various viewpoints.

1-6. Inverse Fourier Transform

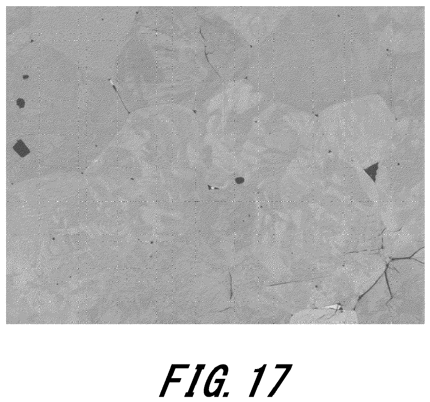

Next, an example of creating an SEM image by using the inverse Fourier transform will be described with reference to FIGS. 17 to 19.

FIG. 17 is an image illustrating an example of the SEM image according to the related art. FIG. 18 is an image obtained by creating the image illustrated in FIG. 17 with the strength of the wavenumber 1. FIG. 19 is an image created by performing the inverse discrete Fourier transform.

As described above, the signal F(k) can be subjected to the inverse discrete Fourier transform by performing the filtering processing and return to the signal distribution f(n) in the real space. The image illustrated in FIG. 18 is an image created by performing the discrete Fourier transform and using the strength of the signal of the wavenumber 1. Since the signal of the wavenumber 1 is sensitive to the inclination of the surface, a fine unevenness of the surface can be observed as illustrated in FIG. 18. However, for example, in a case where it is desired to extract dust on the surface of the sample S1, the unevenness is conspicuous in the data illustrated in FIG. 18, and thus, contrast unnecessarily increases.

On the other hand, the signal processor 105 performs the inverse discrete Fourier transform with F(0) = 0 on the result of the discrete Fourier transform to return the result to the signal distribution in the real space. That is, the signal of the wavenumber 0 is removed. Then, when the SEM image is created using an average value of f(n), the image as illustrated in FIG. 19 can be obtained. In the image thus obtained, signals of the wavenumbers of 1 to 8 are reflected on the real space. As a result, as illustrated in FIG. 19, it is possible to easily observe a relatively large unevenness caused by dust and dents. As described above, by further performing the filtering processing on the result of the discrete Fourier transform, some signals of unnecessary wavenumbers among signals of a plurality of wavenumbers are removed. Then, a signal remaining after removing the signals of the unnecessary wavenumbers is subjected to the inverse discrete Fourier transform, and an image is created using the signal, whereby the information of the sample can be selectively extracted.

1-7. Modification of Electron Detector

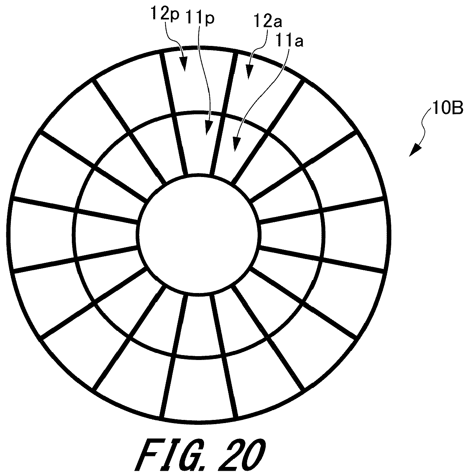

Next, a modification of the electron detector will be described with reference to FIG. 20.

FIG. 20 is a diagram illustrating the modification of the electron detector.

In the above-described electron detector 10, the segments 11 are divided only in the circumferential direction as illustrated in FIG. 2. However, segments may also be divided in the radial direction as in an electron detector 10B according to the modification illustrated in FIG. 20. As illustrated in FIG. 20, the electron detector 10B has a plurality of inner segments 11 and a plurality of outer segments 12. The outer segments 12 are arranged radially outward of the inner segments 11.

In a case of using the electron detector 10B according to the modification, the discrete Fourier transformer 104 performs the discrete Fourier transform with signal strength distribution of the segments having the same diameter as f(n). For example, the discrete Fourier transform is performed with the signal strength distribution of the plurality of inner segments 11 as f_a(n) and the signal strength distribution of the plurality of outer segments 12 as f_b(n).

The obtained result is combined as in the above-described method to form an image, is subjected to arithmetic processing in the wavenumber space, or is subjected to the inverse Fourier transform to form an image, thereby extracting necessary information.

Furthermore, the discrete Fourier transformer 104 may perform the discrete Fourier transform on a signal strength obtained by combining signals of the segments in the same direction. That is, the discrete Fourier transform is performed by combining signals of an inner segment 11a and an outer segment 12a and combining signals of an inner segment 11p and an outer segment 12p.

Although an example in which segmentation into two segments in the radial direction has been described in the modification illustrated in FIG. 20, the present invention is not limited thereto, and segmentation into three or more segments may be made. In addition, the number of inner segments and the number of outer segments do not have to be equal.

2. Second Embodiment

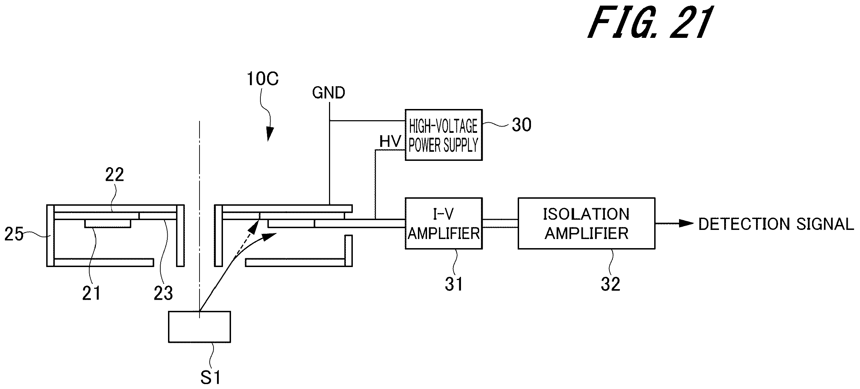

Next, an analysis device according to a second embodiment will be described with reference to FIG. 21.

FIG. 21 is a schematic configuration diagram illustrating a detector of the analysis device according to the second embodiment.

The analysis device according to the second embodiment is different from the analysis device (electron microscope) 100 according to the first embodiment in a configuration of the detector. Therefore, the configuration of the detector will be described, and portions common to the analysis device according to the first embodiment are denoted by the same reference numerals, and an overlapping description will be omitted.

For the analysis device (electron microscope) 100 according to the first embodiment, an example in which the backscattered electron detector that detects the backscattered electrons is applied as the electron detector 10 has been described. On the other hand, a detector 10C of the analysis device (electron microscope) according to the second embodiment is an electron detector capable of detecting low-energy electrons.

As illustrated in FIG. 21, the detector 10C includes a semiconductor detection element 21, an insulator 22, a carbon plate 23, and a shield 25. Similarly to the segment 11 of the electron detector 10 according to the first embodiment, the semiconductor detection element 21 is segmented into a plurality of segments and arranged rotationally symmetrically with respect to an optical axis OA of an electron beam. In addition, the semiconductor detection element 21 is fixed to the shield 25 via the insulator 22.

In addition, a high-voltage power supply 30 and an I-V amplifier 31 are connected to the semiconductor detection element 21. The high-voltage power supply 30 applies a positive high voltage to the semiconductor detection element 21. As for the magnitude of the applied voltage, a voltage for accelerating secondary electrons to an energy level detectable by a semiconductor detector is applied. Since a generally used semiconductor detector can detect electrons of 2 keV, the high-voltage power supply 30 applies a voltage of +2 keV to the semiconductor detection element 21. The applied voltage is not limited thereto.

In addition, the semiconductor detection element 21 is covered with the shield 25. As a result, it is possible to prevent an electric field generated by the voltage applied to the semiconductor detection element 21 from affecting an electromagnetic field around a sample S1. An electron intake port for taking in the secondary electrons is formed on one surface of the shield 25 that faces the sample S1. Furthermore, a passage hole through which primary electrons pass is formed at the center of the shield 25 in a radial direction. The shield 25 is grounded or at the same potential as the sample S1.

The electrons generated from the sample S1 fly in a straight line and pass through the electron intake port of the shield 25. The secondary electrons that have passed through the electron intake port are deflected and accelerated toward the detector by an electric field of the detector 10C, and are incident on the segments of the semiconductor detection element 21. Due to a structure of the detector 10C, the backscattered electrons also pass through the electron intake port of the shield 25. Therefore, the carbon plate 23 is disposed at a point to which a straight line connecting a position on the sample S1 where the electrons are incident and the electron intake port of the shield 25 extends. As a result, it is possible to prevent the electrons from entering a shield material and generating the secondary electrons when the high-energy electrons (backscattered electrons) emitted from the sample S1 are taken into the shield 25. As a result, an influence of the backscattered electron signal on a detection signal can be suppressed.

In addition, carriers are generated in the semiconductor detection element 21 by the electrons incident on a detection surface of the semiconductor detection element 21, and are extracted as a current signal. The current signal output from the detector 10C is converted into a voltage by the I-V amplifier 31 and amplified. The I-V amplifier 31 is connected to an isolation amplifier 32.

The amplified voltage signal is input to the isolation amplifier 32. An input side and an output side of the isolation amplifier 32 are electrically insulated. Therefore, it is possible to remove a high voltage applied to the input side and extract only the signal. As a result, a signal detected at a high potential can be treated as a signal at a normal potential. As a result, signal strength distribution of the secondary electrons can be acquired in a rotation direction around the optical axis OA of the electron beam.

The acquired strength distribution is processed similarly to the strength distribution of the backscattered electrons in the electron microscope 100 according to the first embodiment described above, and is subjected to wavenumber decomposition to extract information of the sample S1. As a result, it is possible to obtain the same operation and effect as those of the electron microscope 100 according to the first embodiment described above also with the electron microscope including such a detector 10C.

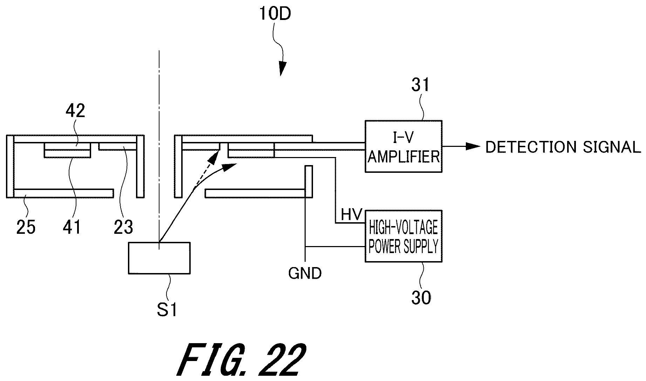

FIG. 22 is a schematic configuration diagram illustrating a modification of the detector of the electron microscope according to the second embodiment.

As illustrated in FIG. 22, a method of using a phosphor 41 that emits light when the electrons are incident as a detection unit of a detector 10D is also conceivable. The detector 10D illustrated in FIG. 22 includes the phosphor 41 and a photodetector 42. The photodetector 42 is disposed between the phosphor 41 and a shield 25. An I-V amplifier 31 is connected to the photodetector 42.

Aluminum is deposited on a surface of the phosphor 41 that faces the sample S1. Therefore, conductivity is secured on the facing surface of the phosphor 41. Emission strength of the phosphor 41 depends on incident electron energy. Normally, since light is not emitted with energy of the secondary electrons, a voltage that accelerates the secondary electrons and allows light emitted from the phosphor 41 to have a strength detectable by the photodetector 42 is applied to a portion where the conductivity is secured. Therefore, a high-voltage power supply 30 is connected to the phosphor 41, and a voltage is applied from the high-voltage power supply 30 to the phosphor 41.

Light emission from the phosphor 41 is detected by photodetector 42. The photodetector 42 is divided into a plurality of light receiving surfaces, for example, similarly to the segments 11 of the electron detector 10 according to the first embodiment illustrated in FIG. 2. Then, a signal corresponding to a light amount of each of the plurality of light receiving surfaces is output to the I-V amplifier 31.

Since the phosphor 41 is an insulator, an electron incident surface where the conductivity is secured and a surface of the phosphor 41 that is adjacent to the photodetector 42 are electrically insulated. Therefore, a high voltage is not applied to the photodetector 42. As a result, a signal output from each light receiving surface of the photodetector 42 becomes a voltage of a general signal level.

The other configurations are similar to those of the analysis device (electron microscope) 100 according to the first embodiment, and thus a description thereof will be omitted. An analysis device (electron microscope) including such a detector 10D can also obtain the same operation and effect as those of the analysis device (electron microscope) 100 according to the first embodiment described above.

A method of detecting the secondary electrons is not limited to the above-described example. As detectors for the secondary electrons, for example, a plurality of commonly used Everhart-Thornley (E-T) detectors are prepared and arranged at positions rotationally symmetric with respect to the optical axis OA. Then, detection signals obtained from the plurality of detectors may be used as the strength distribution.

3. Third Embodiment

Next, an analysis device according to a third embodiment will be described.

In the electron microscope 100 applied as the analysis device according to the first embodiment described above, the method of extracting the information regarding the shape of the sample S1 has been described. The signal strength distribution obtained by the detector (multi-segment detector) in which the detection surface is divided into a plurality of segments is reflected not only on the shape but also on the crystallinity of the sample, and can be used for grain size distribution measurement by extracting the size and the crystallinity. The analysis device according to the third embodiment is applied to grain size distribution measurement. Therefore, portions common to those of the electron microscope 100 according to the first embodiment are denoted by the same reference numerals, and an overlapping description will be omitted.

The analysis device according to the third embodiment includes a determination unit that compares a signal obtained by performing Fourier transform or a signal obtained by performing inverse Fourier transform by performing filtering processing on a signal obtained by performing Fourier transform with a signal acquired for each incident position of an electron beam. Then, the determination unit includes a determination unit that determines whether or not crystal orientations of the incident positions of the electron beam are the same by the comparison. Then, an image creator 102 creates an image in which coordinates of the same crystal orientation can be identified from the determination result of the determination unit.

When a crystalline sample is irradiated with the electron beam at a relatively low acceleration voltage, an electron back scatter diffraction (EBSD) pattern is projected onto an electron detector 10 attached under an objective lens 5. Signal strength distribution obtained by the electron detector 10 includes, in addition to a signal difference derived from the EBSD pattern, channeling contrast and a signal based on a surface shape formed by pretreatment of a sample S1.

Then, the acquired signal strength distribution is subjected to wavenumber decomposition, so that the channeling contrast is reflected on a wavenumber 0 ($k = 0$). In addition, a wavenumber 1 ($k = 1$) and a wavenumber 2 ($k = 2$) include surface shape information. A polygonal hole shape is easily reflected on a wavenumber of 3 ($k = 3$) or more, but such a shape is hardly formed by sample pretreatment such as mechanical polishing or ion cross section milling, and thus, contrast regarding the shape is hardly included.

Here, a signal strength difference derived from the EBSD pattern is considered. The EBSD pattern is formed by crossing band-shaped signal strengths called Kikuchi lines. When projected onto a plurality of segments 11 of the electron detector 10, the EBSD pattern affects the signal strength difference and appears as a difference in strength/phase of wavenumber signals from $k = 0$ to $k = N/2$.

In addition, in the sample pretreatment used for measuring grain size distribution of crystal grains, wavenumber components of $k = 1$ and $k = 2$ are easily affected, and signals of $k = 3$ or more are hardly affected. Therefore, in a case of the signals of $k = 3$ or more, the strength distribution derived from the EBSD pattern is dominant. Therefore, by using a signal excluding the wavenumber components of $k = 1$ and $k = 2$ for determination of a crystal grain shape, it is possible to reduce erroneous determination of the grain shape due to an unevenness shape of the surface and to acquire a correct crystal grain shape.

For example, by setting the signals of $k = 1$ and $k = 2$ to 0 and performing inverse discrete Fourier transform, a strength distribution signal from which the influence of the surface shape is eliminated is obtained. Then, the strength distribution signal from which the influence of the surface shape is eliminated is subjected to grain size and shape display processing or grain boundary extraction processing. This makes it possible to perform the grain size distribution measurement excluding the influence of the shape. In addition, the strength and the phase of the wavenumber component less affected by the surface shape among the respective wavenumber components subjected to the discrete Fourier transform may be compared at each incident position of the electron beam, and in a case where the strengths and the phases are close to each other, the crystal orientations may be determined to be the same and used for the determination of the grain shape.

As a result, with the analysis device according to the third embodiment, it is possible to prevent crystal orientations from being determined to be different from each other when the crystal orientations are the same as each other due to an unevenness and a groove formed by mechanical polishing or ion milling during the pretreatment of the sample S1. Further, a restriction on the sample S1 that can be measured can be relaxed, and a smoothness required at the time of pretreatment of a measurement surface can be lowered.

The other configurations are similar to those of the electron microscope 100 according to the first embodiment, and thus a description thereof will be omitted. It is possible to obtain the same operation and effect as those of the electron microscope 100 according to the first embodiment described above also with the analysis device according to the third embodiment.

4. Fourth Embodiment

Next, an analysis device according to a fourth embodiment will be described.

In a case of a steel material or the like, when an inclusion is mixed in the material, a crack spreads from the inclusion and causes fracture. Therefore, a manufactured steel material is cut out, an SEM image of a cross section of the steel material is observed with an electron microscope to automatically determine a position of an inclusion, and an electron beam is incident on coordinates of the inclusion to perform X-ray analysis. As a result, the composition, shape, and size of the inclusion are specified and used for optimal process design. This method is generally called particle analysis. The analysis device according to the fourth embodiment is applied to particle analysis. Therefore, portions common to those of the electron microscope 100 according to the first embodiment are denoted by the same reference numerals, and an overlapping description will be omitted.

The analysis device according to the fourth embodiment includes a feature extractor that extracts a signal of a necessary wavenumber from a result of Fourier transform and extracts a feature on a sample by processing the signal. Then, an image creator 102 creates an image in which the feature is highlighted by the feature extractor.

Coordinate information of a feature point extracted by the feature extractor is transmitted to an analyzer.

Here, when observing a sample S1 of a steel material having high crystallinity, channeling contrast in which a brightness of an image changes depending on a crystal orientation is observed in an SEM image. The channeling contrast may be a problem in processing of extracting an inclusion from the SEM image. In general particle analysis, an inclusion is determined by image processing based on the contrast of the SEM image, but when an intensity of the channeling contrast is close to an intensity of the inclusion, it is difficult to determine the inclusion by the image processing, as a result of which the particle analysis cannot be performed.

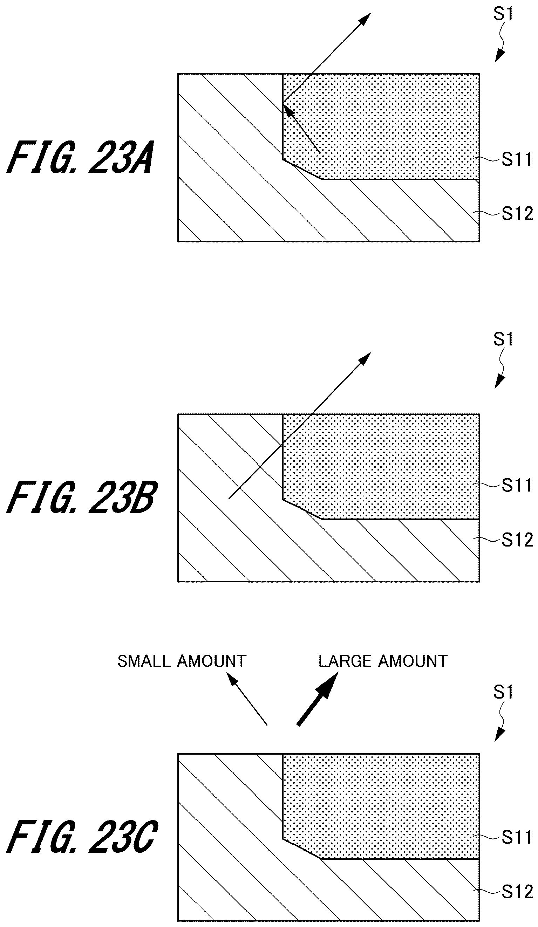

FIGS. 23A to 23C are diagrams illustrating a behavior of electrons in a sample in which an inclusion is precipitated in a base material of the sample S1.

As illustrated in FIG. 23A, when an inclusion S11 is precipitated in a base material S12 of the sample S1, the base material S12 and the inclusion S11 are different from each other in constituent molecules and densities thereof. Therefore, at a boundary between the inclusion S11 and the base material S12, there is a difference in probability that the electrons are scattered. FIGS. 23A and 23B illustrate an example in which the electrons are scattered around the boundary between the base material S12 and the inclusion S11.

In a case where a scattering probability in the base material S12 is higher than a scattering probability in the inclusion S11, when the electrons scattered in the inclusion S11 travel toward the base material S12, the amount of electrons backscattered toward the inclusion S11 at the boundary between the base material S12 and the inclusion S11 increases as illustrated in FIG. 23A. On the other hand, when the electrons scattered in the base material S12 travel toward the inclusion S11, a ratio of electrons directly traveling toward the inclusion S11 without being scattered at the boundary is high as illustrated in FIG. 23B. As a result, in the vicinity of the boundary between the base material S12 and the inclusion S11, an emission amount is biased depending on an emission direction of the electrons as illustrated in FIG. 23C.

In the example illustrated in FIGS. 23A to 23C, the scattering probability in the inclusion S11 is lower than that in the base material S12, but the scattering probability in the base material S12 may be lower than that in the inclusion S11. Even in this case, the emission amount is biased depending on the emission direction of the electrons in the vicinity of the boundary. That is, even if there is no unevenness on the surface, a signal difference occurs for the signal detected by the electron detector 10 in the vicinity of the boundary of the inclusion S11.

Next, a generation process of the channeling contrast will be described.

When a crystalline sample is irradiated with the electron beam, a penetration depth changes depending on an incident direction of the electrons and an orientation of a crystal. Since the electrons that have deeply penetrated are far from the surface of the sample S1, it is difficult for the electrons to reach the surface of the sample S1 due to scattering and to be emitted. In addition, the electrons scattered at a shallow position easily reach the surface of the sample S1 by scattering and are easily emitted because a distance to the surface of the sample S1 is short. Therefore, the amount of emitted electrons also changes according to the orientation of the crystal, and appears as contrast. There is no difference in signal amount depending on the emission direction of the electrons.

As described above, in the channeling contrast, there is no difference in signal amount depending on the emission direction, but a difference in signal amount occurs near the inclusion S11. Therefore, the channeling contrast and the contrast of the inclusion S11 can be separated by a method of performing wavenumber decomposition on the signal strength distribution obtained by the electron detector 10.

In a wavenumber-decomposed signal, the channeling contrast becomes dominant at a wavenumber 0 ($k = 0$), and the difference in signal strength due to the inclusion S11 becomes dominant in a signal component of a wavenumber of 1 ($k = 1$) or more. Therefore, the obtained signal is subjected to wavenumber decomposition, and an SEM image is created with the signal component of $k = 1$ or more, so that only the inclusion S11 can be extracted.

Extraction Processing

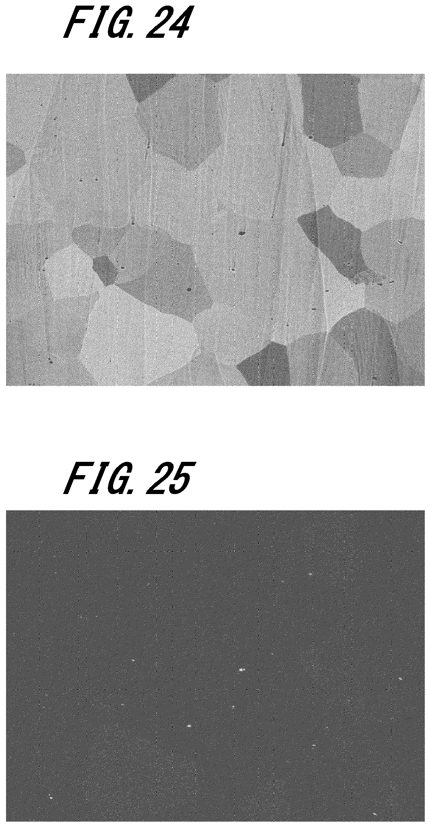

Next, an actual extraction operation example will be described with reference to FIGS. 24 to 30B.

FIGS. 24 and 25 are views illustrating images at the time of the extraction operation.

FIG. 24 is an SEM image created by adding signals obtained in segments 11 of the electron detector 10 segmented into 16 segments 11. Therefore, the image in FIG. 24 corresponds to an image called a general backscattered electron image (BED image, composition image, or COMPO image).

In the image illustrated in FIG. 24, various contrasts such as the channeling contrast based on a crystal orientation difference and an unevenness shape of the surface are observed in addition to the inclusion (granular black spot) S11. Since a signal of a wavenumber 1 is likely to include a signal reflecting the surface shape, the image illustrated in FIG. 25 is an SEM image created using a strength of a signal component of a wavenumber 2. As illustrated in FIG. 25, in the created image, an influence of the channeling contrast and the unevenness is reduced, and a portion estimated as the inclusion S11 in FIG. 24 appears as a white bright spot. For the image thus obtained, the feature extractor obtains the coordinates of the inclusion S11 by binarizing the intensity with a threshold value. Then, the inclusion can be specified by performing X-ray analysis on the obtained coordinates.

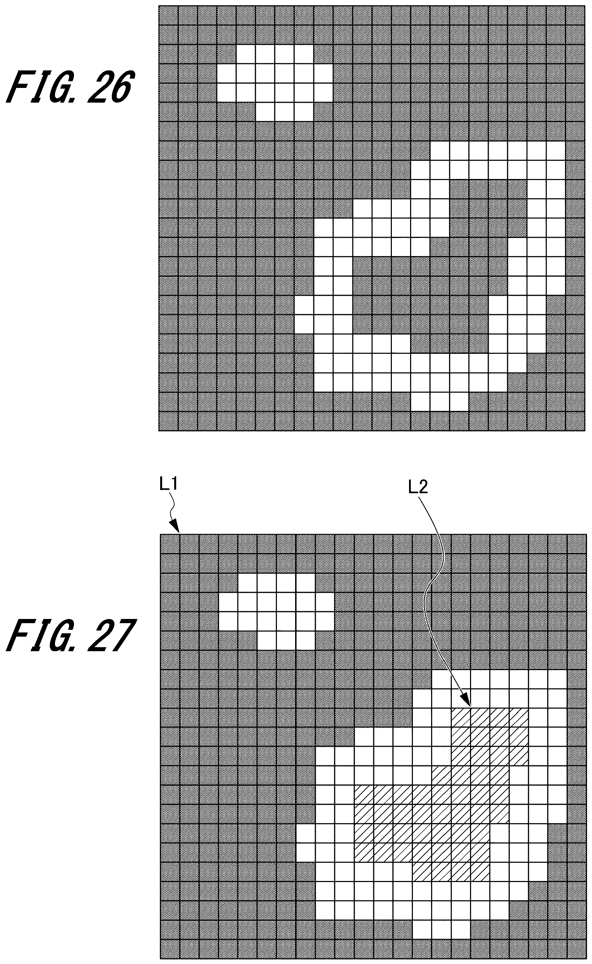

FIG. 26 is an image obtained by converting the wavenumber-decomposed signal into an SEM image.

When the inclusion S11 is large, not a white bright spot but a region of the inclusion S11 surrounded by a white circle may be extracted as illustrated in FIG. 26 when the wavenumber-decomposed signal is converted into the SEM image. In this case, for example, an image obtained by performing the wavenumber decomposition is subjected to processing such as noise removal, and then subjected to labeling processing. Here, in the labeling processing, in a binarized image, adjacent regions having the same brightness are collectively defined as one region. Then, processing of classifying each object in the image is performed by labeling the region.

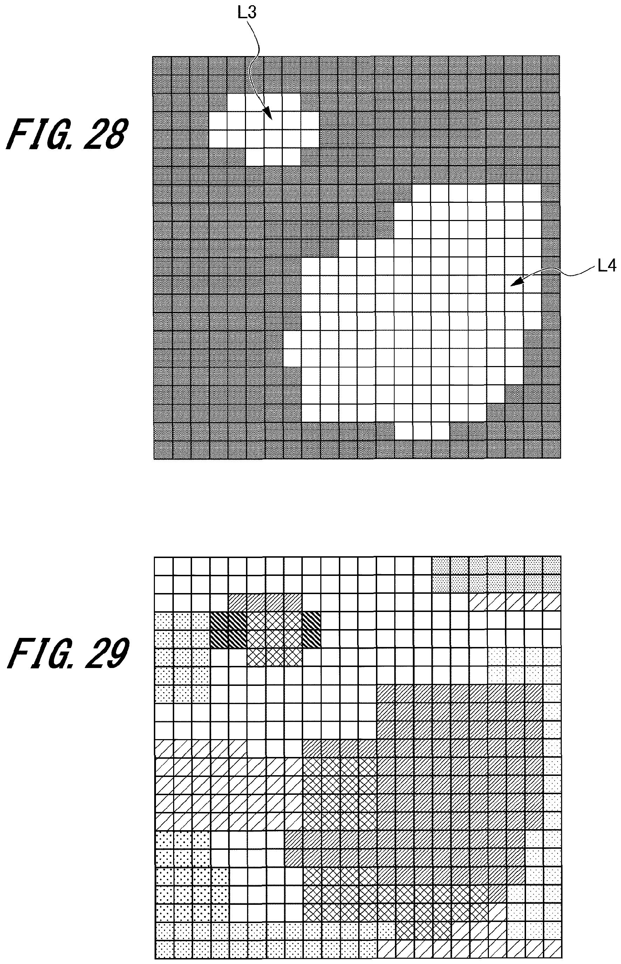

FIG. 27 is an image obtained by performing the labeling processing on the image illustrated in FIG. 26. FIG. 28 is an image obtained by extracting the inclusions.

When the image illustrated in FIG. 26 is binarized and the dark region is subjected to the labeling processing, labels L1 and L2 are assigned to a base material region and a region of the inclusions surrounded by a white circle as illustrated in FIG. 27. Normally, since most of the field of view corresponds to the base material S12, a label occupying the largest area in the labeled regions is the base material, and the other labeled regions are filled with white, so that the inclusions can be extracted as illustrated in FIG. 28. Then, the extracted inclusions are subjected to the labeling processing again to be assigned with labels L3 and L4. As a result, even in a case of the crystalline sample, impurity particles can be extracted while excluding the influence thereof.

In the above example, the simplest example in which the inclusion S11 is extracted from the wavenumber decomposition result is described. Arithmetic processing may be performed by combining the wavenumber decomposition result with data before the wavenumber decomposition, for example, the SEM image as illustrated in FIG. 24 to extract the inclusion. Alternatively, the inclusion may be recognized by using artificial intelligence (AI), such as Deep Learning, for data subjected to the wavenumber decomposition. The data subjected to the wavenumber decomposition is a signal strength having a different feature for each shape and composition, and the feature is learned by machine learning or deep learning. Then, the feature extractor determines the type of the inclusion S11 by using the result.

Method of Reducing Strength Difference Derived from EBSD

In addition, in the third embodiment described above, it has been described that the strength difference derived from the EBSD is reflected on k = 0 to N/2 when the crystalline sample is observed under the condition that an acceleration voltage is relatively low. Since the channeling contrast is contrast observed in the crystalline sample, it is also conceivable that the strength difference derived from the EBSD occurs in the fourth embodiment. Therefore, a method of reducing the strength difference derived from the EBSD by setting an observation condition to a condition in which the EBSD pattern hardly occurs will be described.

The EBSD pattern is formed by the electrons inelastically scattered near the surface of the sample S1.

Therefore, in the analysis device according to the fourth embodiment, the electrons with a relatively low acceleration voltage (for example, 5 kV) are perpendicularly incident to decrease the penetration depth of the electrons, so that inelastic scattering is likely to occur near the surface of the sample S1.

On the other hand, in a case where the electrons with a relatively high acceleration voltage are perpendicularly incident, the electrons deeply penetrate into the sample S1 and are scattered. Therefore, inelastic scattering is less likely to occur in the vicinity of the surface of the sample S1, and the EBSD pattern is less likely to be formed. Therefore, even in the crystalline sample, the strength difference derived from the EBSD does not appear in the wavenumber-decomposed signal, and a signal related to the shape of the inclusion S11 becomes dominant.

As a result, even in the crystalline sample, it is possible to prevent the strength distribution derived from the EBSD pattern from being included in the wavenumber-decomposed signal, and it is possible to improve accuracy of the extraction processing for the inclusion S11.

Example of Second Extraction and Specific Operation

Next, an example of second extraction and a specific operation will be described with reference to FIGS. 28 to 30B.

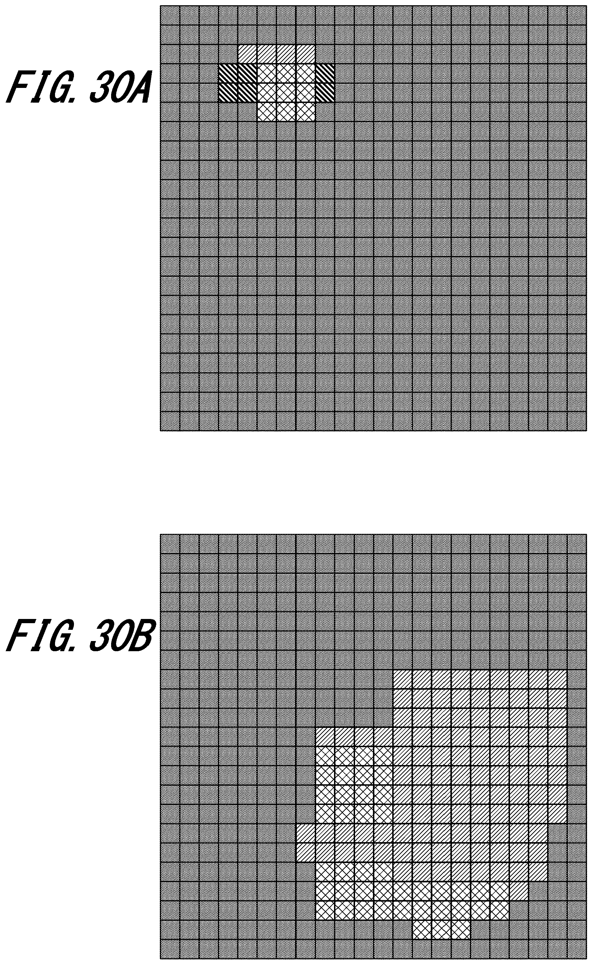

FIG. 29 is an image obtained by the second extraction and the specific operation. FIGS. 30A and 30B are images obtained by extracting the inclusion.

In the extraction operation described above, the inclusion S11 is extracted from the image obtained by performing the wavenumber decomposition in order to specify the type of the inclusion S11. Then, a coordinate position of the extracted inclusion S11 is specified by analysis using an X-ray analyzer or the like. However, the type of the inclusion S11 included in the steel material is often limited, and it takes time to perform the X-ray analysis on all the particles.

In addition, a scattering cross-sectional area that is a ratio at which the electrons are scattered in an atomic nucleus tends to be larger as an atomic number is higher. Therefore, an emission ratio of the backscattered electrons tends to be higher for a sample having a higher atomic number and a higher density. The contrast seen in the backscattered electron image has a brightness corresponding to the atomic number of the sample S1.

For this reason, in the sample S1 in which the type of the inclusion S11 is limited, the inclusion may be classified by the signal amount of the backscattered electrons. Since the analysis device of the present embodiment detects the backscattered electrons, the type of the inclusion S11 is estimated using the signal amount of the coordinates after extracting the inclusion S11.

The extraction processing for the inclusion S11 described above is executed, and the labeling processing is performed on the obtained inclusion image as illustrated in FIG. 28. In the example illustrated in FIG. 28, the labels L3 and L4 are assigned to the respective inclusions S11 by labeling the white regions. Then, an inclusion A to which the label L3 is assigned and an inclusion B to which the label L4 is assigned are extracted.

Next, the signal amount of the backscattered electrons of the extracted inclusion S11 is obtained. The signal amount is obtained by averaging (or adding) the signals from the segments that are obtained by the electron detector 10. As a result, the image illustrated in FIG. 29 can be obtained. The signal amount of each label region can be obtained from coordinates of the labeling result thus obtained and the signal amount of each set of coordinates.

Since the images in FIGS. 28 and 29 are originally calculated using the same data, a deviation in coordinates does not occur between pieces of data unless the coordinates are intentionally moved by signal processing. Therefore, coordinate values corresponding to the respective labels L3 and L4 in FIG. 28 are acquired. Then, the signal amount is extracted from the image illustrated in FIG. 29 by using the acquired coordinate values.

As a result, the images illustrated in FIGS. 30A and 30B can be obtained. FIG. 30A is an image obtained by extracting a signal amount of coordinates corresponding to the inclusion A to which the label L3 is assigned. FIG. 30B is an image obtained by extracting a signal amount of coordinates corresponding to the inclusion B to which the label L4 is assigned. Then, an average value of the signal amounts in regions (portions other than a black portion) extracted as the respective inclusions is calculated using the images illustrated in FIGS. 30A and 30B. Here, it is assumed that an average signal amount of the inclusion A is "10" and an average signal amount of the inclusion B is "30".

In a case where the inclusion S11 included in the sample S1 is carbon or a sulfide (for example, manganese sulfide), carbon has an atomic number of 6, and manganese sulfide has atomic numbers of 16 and 25. Therefore, manganese sulfide has a larger amount of backscattered electrons than carbon. Accordingly, it can be determined that the inclusion A is carbon and the inclusion B is a sulfide. Thus, the composition of the inclusion can be determined by calculating the average signal amount for the extracted region of each inclusion.

In the operation example described above, an example in which the average of the signal amounts is obtained to determine the composition of the inclusion based on the magnitude of the average has been described, but the present invention is not limited thereto. For example, a method such as clustering data of the signal amount of each particle may be used. In a case where there are three types of inclusions included in the sample, classification into a group with a large signal amount, a group with an intermediate signal amount, and a group with a small signal amount is made by clustering. As a result, the group with a large signal amount can be classified as an inclusion having a high atomic number, and the group with an intermediate signal amount can be classified as an inclusion having an intermediate atomic number. Then, a group with a small signal amount can be determined and classified as an inclusion having a low atomic number.

The result of such classification is preferably displayed on a screen by color coding or the like for each type of inclusion. As a result, the user can easily identify the type of the inclusion. In addition, a content ratio of each inclusion may be calculated from an area occupied by each group in a measurement region, or the grain shape and size may be obtained for each inclusion, and distribution of the grain size and shape for each group may be presented to the user.

Furthermore, in a case where it is desired to accurately analyze the type of the inclusion, the extracted inclusion may be irradiated with the electron beam again, and the type of the inclusion may be analyzed by an element analyzer such as energy-dispersive X-ray spectroscopy (EDS). In the inclusion extraction method of the present embodiment described above, the inclusions have already been classified from the signal amount. Among the inclusions, only an inclusion whose type is difficult to specify only by the signal amount of the backscattered electrons may be analyzed. As a result, even when the same field of view is subjected to the particle analysis, the number of inclusions to be analyzed is reduced as compared with the method according to the related art, and improvement in throughput can be expected.

A method of performing element analysis on the extracted inclusion is the same as the method according to the related art.

5. Fifth Embodiment

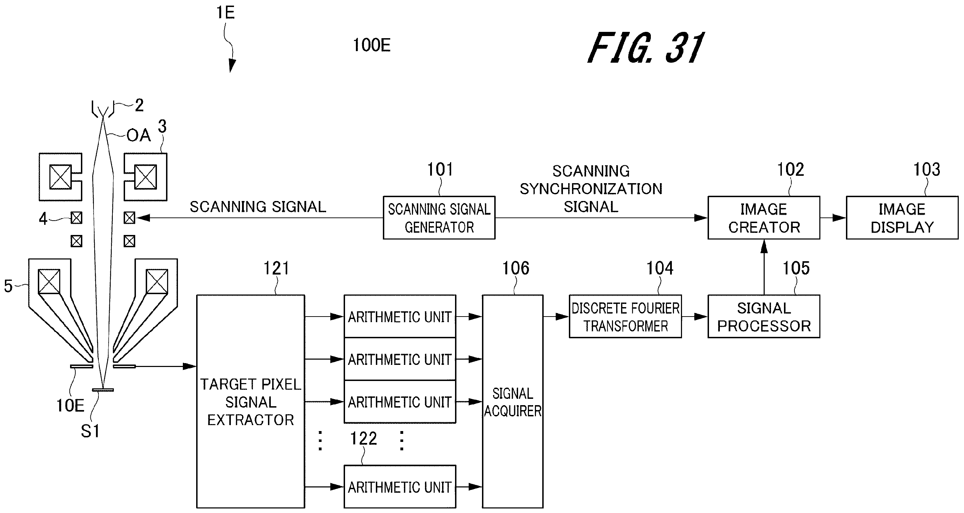

Next, an analysis device according to a fifth embodiment will be described with reference to FIGS. 31 to 35.

FIG. 31 is a schematic configuration diagram illustrating the analysis device according to the fifth embodiment.

The analysis device according to the fifth embodiment is different from the analysis device (electron microscope) 100 according to the first embodiment in a configuration of a detector. Therefore, portions common to those of the analysis device (electron microscope) 100 according to the first embodiment are denoted by the same reference numerals, and an overlapping description will be omitted.

In addition, the analysis device according to the fifth embodiment is a scanning electron microscope (SEM) that irradiates a sample with an electron beam and observes backscattered electrons. The analysis device is referred to as an electron microscope. As illustrated in FIG. 31, an electron microscope 100E includes a scanning signal generator 101, an image creator 102, an image display 103, a signal processor 105, a discrete Fourier transformer 104, a signal acquirer 106, a plurality of arithmetic units 122, and a target pixel signal detector 121. In addition, a lens barrel 1E includes an electron beam source 2 that emits the electron beam, a focusing lens 3, a scanning deflector 4, an objective lens 5, and a detector 10E.

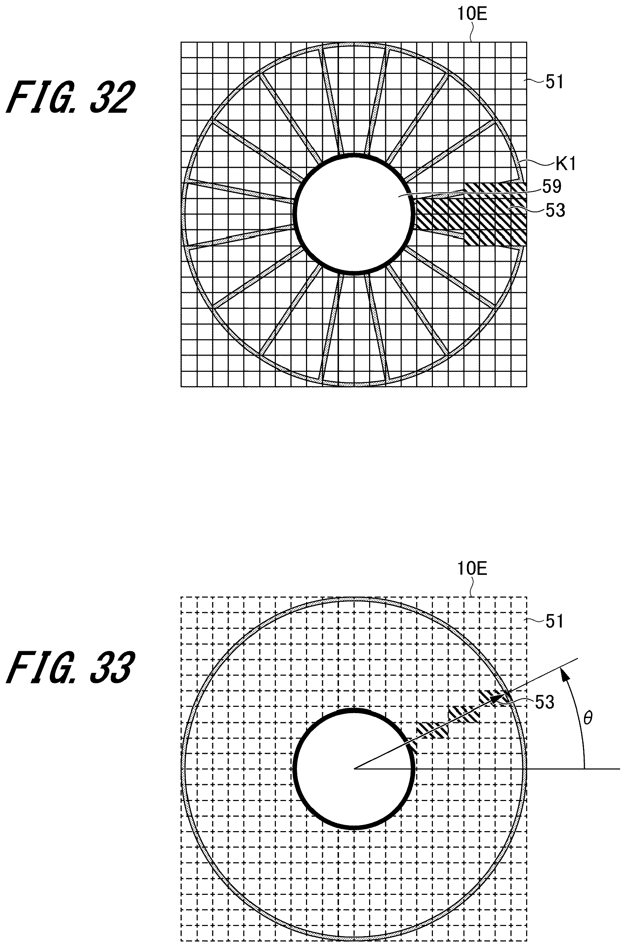

FIG. 32 is a plan view schematically illustrating the detector 10E.

As illustrated in FIG. 32, the detector 10E includes a plurality of detection elements 51 arranged in a two-dimensional array like a complementary metal-oxide-semiconductor (CMOS) or the like. An opening 59 through which the electron beam incident on a sample S1 can pass is formed at the center of the detector 10E in a radial direction.

In addition, the plurality of detection elements 51 are segmented into a plurality of segments 53 for each predetermined region so as to surround the opening 59. The target pixel signal detector 121 extracts signals from detection elements 51 corresponding to the plurality of segments 53 among the plurality of detection elements 51. Then, the target pixel signal detector 121 outputs the detected signals to the plurality of arithmetic units 122. The number of arithmetic units 122 corresponds to the number of segments 53. Then, the arithmetic unit 122 adds the signals of the plurality of detection elements 51 corresponding to each segment 53 to obtain a detection signal of the corresponding segment 53. The obtained detection signal is transmitted to the signal acquirer 106.

As a method of setting the segment 53, for example, a figure K1 in which a plurality of sectors are arranged at equal angular intervals in a circumferential direction of the opening 59 is projected on a detection surface of the detector 10E. Then, the detection elements 51 in a region surrounded by a plurality of sectors of the figure K1 correspond to each segment 53.

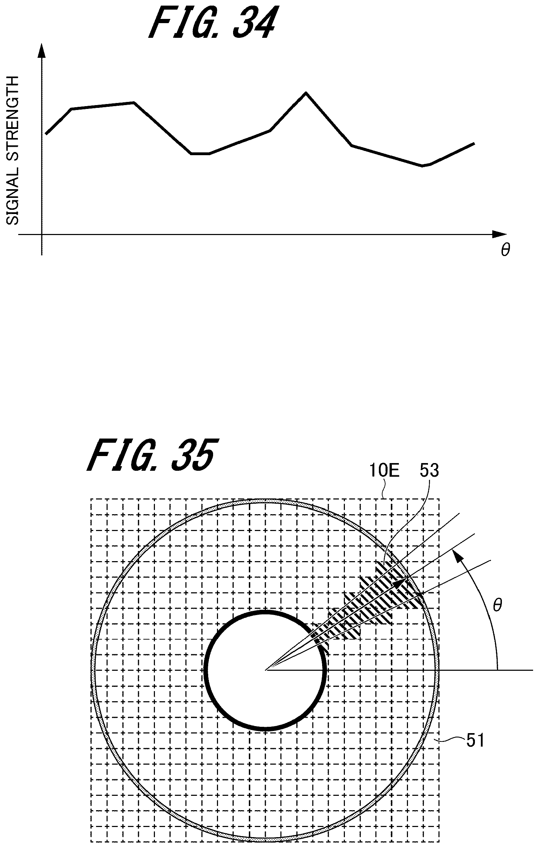

FIG. 33 is a diagram illustrating another example of the signal strength acquisition method. FIG. 34 is a graph illustrating signal strength distribution obtained in the example illustrated in FIG. 33. In FIG. 34, the vertical axis represents a signal strength $f(\theta)$, and the horizontal axis represents an angle $\theta$.

As illustrated in FIG. 33, a line segment is drawn outward in the radial direction from an optical axis with respect to a signal from the detector 10E. Then, the arithmetic unit 122 adds the signal strengths of the detection elements 51 positioned on the line segment while changing $\theta$ that is the angle of the line segment at predetermined angular intervals to obtain the average thereof. As a result, the signal strength $f(\theta)$ as illustrated in FIG. 34 can be obtained. Then, the discrete Fourier transformer 104 can obtain a strength and a phase for each wavenumber component by performing Fourier transform on the signal strength $f(\theta)$ illustrated in FIG. 34. A change angle of $\theta$ is a discrete value such as $\theta = 0°, 2°, 4°,...,$ or $358°$, for example, and may be treated as a continuous value if pixels of the detection element 51 are fine.

FIG. 35 is a diagram illustrating another example of the signal strength acquisition method.

In the example illustrated in FIG. 33, an example in which the signal strengths of the detection elements 51 on the line segment are segmented as the segments 53 has been described, but the present invention is not limited thereto. For example, as illustrated in FIG. 35, an average or added signal of the detection elements 51 in a predetermined angular range (for example, $\theta = 0$ to $2°$) may be set as the signal strength of the segment 53.

The other configurations are similar to those of the electron microscope 100 according to the first embodiment, and thus a description thereof will be omitted. It is possible to obtain the same operation and effect as those of the electron microscope 100 according to the first embodiment described above also with the electron microscope 100E according to the fifth embodiment.

6. Sixth Embodiment

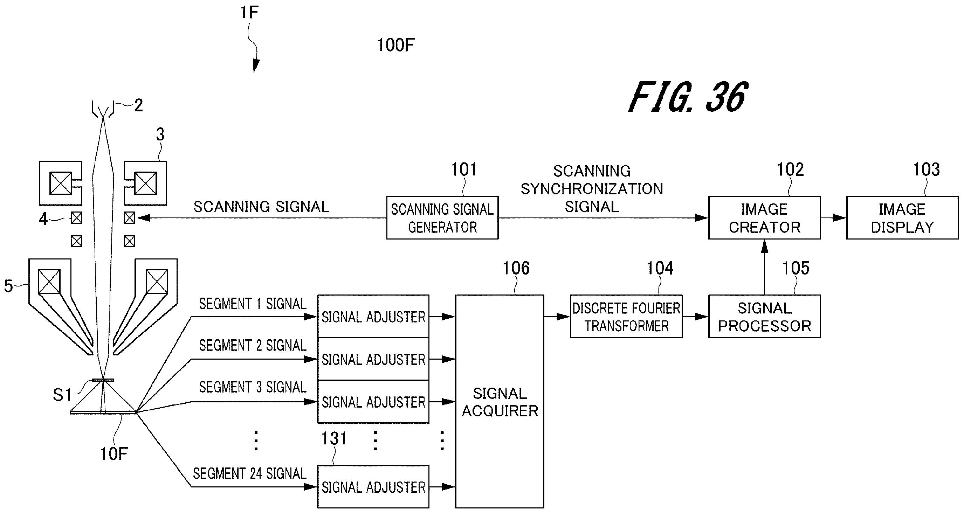

Next, an analysis device according to a sixth embodiment will be described with reference to FIGS. 36 to 38.

FIG. 36 is a schematic configuration diagram illustrating the analysis device according to the sixth embodiment.

The analysis device according to the sixth embodiment is a scanning transmission electron microscope (STEM) 100F. The scanning transmission electron microscope 100F emits a narrowed electron beam onto a sliced sample S1, detects transmitted electrons are detected while scanning on the sample S1, and obtains a STEM image based on a scanning signal and a detection amount. The STEM image includes a bright field image created by detecting, among the electrons transmitted through the sample S1, electrons transmitted without being scattered, and a dark field image created by detecting electrons scattered and diffracted by atoms constituting the sample S1 when the electrons pass through the sample S1.

As illustrated in FIG. 36, the scanning transmission electron microscope 100F includes a lens barrel 1F, a scanning signal generator 101, an image creator 102, an image display 103, a signal processor 105, a discrete Fourier transformer 104, a signal acquirer 106, and a plurality of signal adjusters 131.

The lens barrel 1F includes an electron beam source 2 that emits the electron beam, a focusing lens 3, a scanning deflector 4, an objective lens 5, and a detector 10F. The detector 10F is disposed below the sample S1 along an optical axis OA.

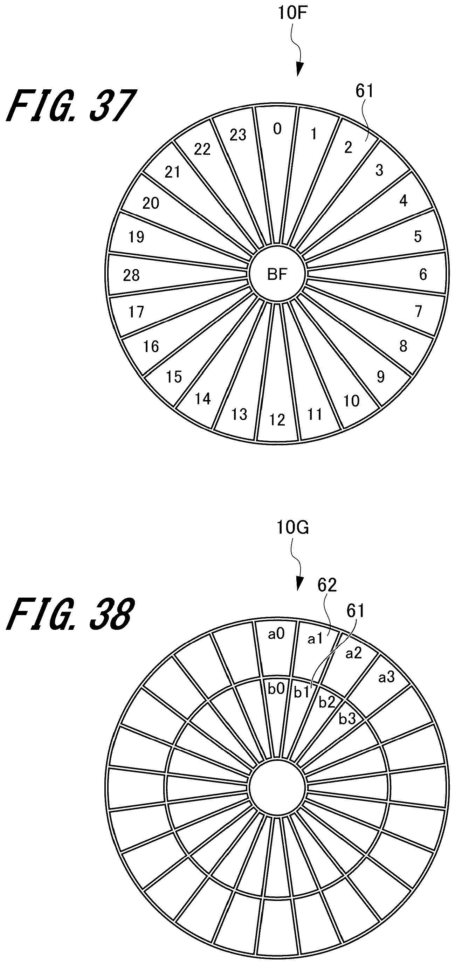

FIG. 37 is a plan view schematically illustrating the detector 10F.

As illustrated in FIG. 37, a segment BF for acquiring the bright field image is disposed at the center of the detector 10F in a radial direction. Then, a plurality of segments 61 (24 segments in the sixth embodiment) are arranged around the segment BF in a circumferential direction. The plurality of segments 61 are detection regions for acquiring the dark field image. The plurality of segments 61 are arranged rotationally symmetrically with respect to the center of the detector 10F, that is, the optical axis OA of the electron beam.

Therefore, the detector 10F includes 24 rotationally symmetric segments 61 for acquiring the dark field image and one segment BF for acquiring the bright field image, that is, 25 segments.

The number of rotationally symmetric segments 61 may be at least four, and the segment BF does not have to be provided.

Among the transmitted electrons, the electrons scattered and diffracted by the atoms constituting the sample S1 are detected by the segments 61 arranged rotationally symmetrically. A scattering direction of the electrons scattered in the sample S1 is biased by crystallinity of the sample S1. Therefore, the number of the segment 61 is n, and a signal strength obtained in each segment 61 is f(n), which is signal strength distribution. Then, the discrete Fourier transformer 104 performs discrete Fourier transform to perform wavenumber decomposition, and can acquire a strength signal and a phase signal of a wavenumber.

FIG. 38 is a view illustrating a modification of the detector.

In the detector 10F illustrated in FIG. 37, segmentation into the segments 61 is made only in the circumferential direction. However, segmentation may also be made in the radial direction as in an electron detector 10G according to the modification illustrated in FIG. 38. As illustrated in FIG. 38, the electron detector 10G has a plurality of inner segments 61 and a plurality of outer segments 62. The outer segments 62 are arranged radially outward of the inner segments 61.

Although an example in which segmentation into two segments in the radial direction has been described in the modification illustrated in FIG. 38, the present invention is not limited thereto, and segmentation into three or more segments may be made.

A detector in which a plurality of detection elements 51 are arranged in a two-dimensional array similarly to the detector 10E according to the fifth embodiment may be used as the detector.

The other configurations are similar to those of the electron microscope 100 according to the first embodiment, and thus a description thereof will be omitted. It is possible to obtain the same operation and effect as those of the electron microscope 100 according to the first embodiment described above also with the scanning transmission electron microscope 100F according to the sixth embodiment.

7. Seventh Embodiment

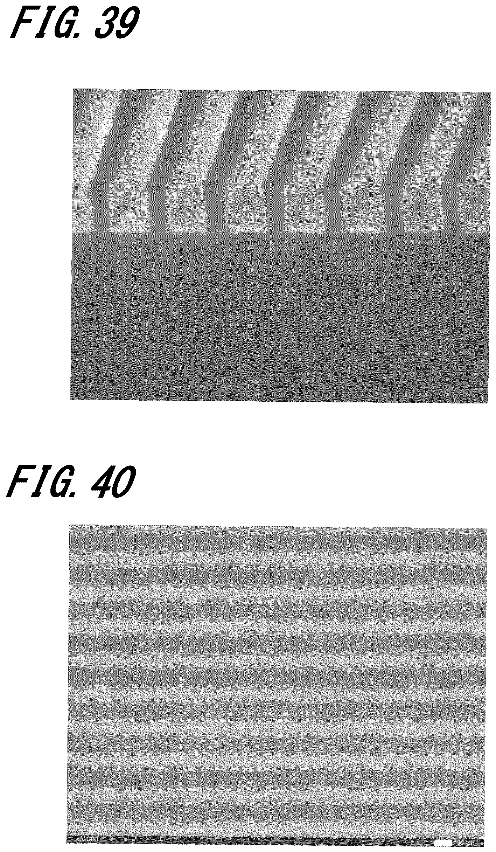

Next, an analysis device according to a seventh embodiment will be described with reference to FIGS. 39 to 42C.

In the electron microscope 100 according to the first embodiment described above, the shape of the sample is reflected in the strength and phase for each wavenumber, and the orientation of the rectangular hole can be determined by the phase of the wavenumber 4. Signals of wavenumbers other than the wavenumber 4 also have strengths and phases reflecting the feature of the shape of the sample S1 and can be used for evaluating the shape of the sample S1 using the strength and the phase for each wavenumber. The analysis device according to the seventh embodiment evaluates a shape of a sample S1 by using a phase of a wavenumber. Therefore, portions common to those of the electron microscope 100 according to the first embodiment are denoted by the same reference numerals, and an overlapping description will be omitted.

FIG. 39 is an SEM image of a shape of a line-and-space on a semiconductor wafer observed obliquely from above.

As illustrated in FIG. 39, it can be confirmed that a line portion (protrusion) and a space portion (recess) are formed on a surface. In a diffraction grating or the like, the line-and-space needs to be correctly formed while having a width in a wide range.

FIG. 40 is an SEM image of the sample illustrated in FIG. 39 observed from above.

In a cross section, a boundary between the line and the space is clearly visible in the SEM image. However, in the image observed from above, gradation is formed near the boundary between the line and the space as illustrated in FIG. 40. Therefore, it is difficult to distinguish the boundary between the line and the space in the SEM image of the sample observed from above as illustrated in FIG. 40.

In addition, in the sample illustrated in FIGS. 39 and 40, since the line portion is made of a material different from a base, contrast between the line and the space appears. However, for example, in a sample formed only of silicon, it may be difficult to provide contrast between the line and the space. In a case of such a sample, it was more difficult to evaluate the shape.

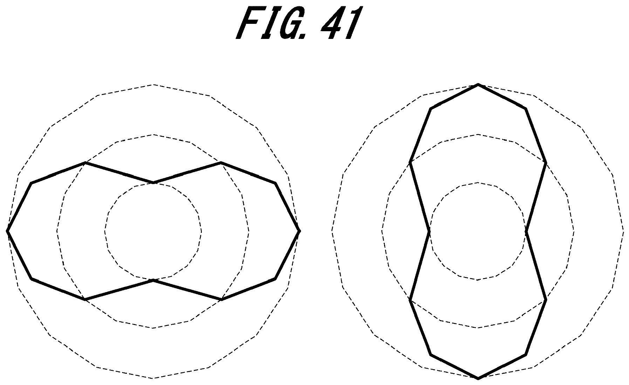

FIG. 41 illustrates a signal component of a wavenumber 2 for FIG. 40. The space portion is illustrated on the left side in the drawing, and the line portion is illustrated on the right side in the drawing.

As illustrated in FIG. 41, when attention is paid to a signal of the wavenumber 2 of the acquired signal, it can be seen that phases in the line portion and the space portion change. Therefore, the line portion and the space portion can be extracted by using the phase of the wavenumber 2.

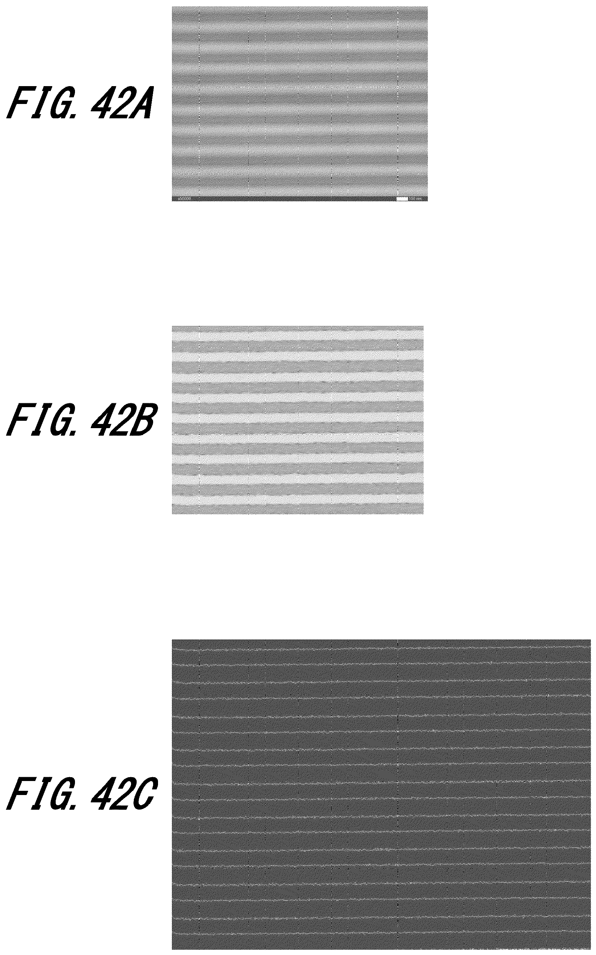

FIGS. 42A and 42B illustrate line-and-space images, FIG. 42A is an SEM image according to the related art, and FIG. 42B is an image obtained by imaging the phase of the wavenumber 2. Furthermore, FIG. 42C is an image brightly illustrating a region having a large phase difference of the wavenumber 2 from an adjacent pixel.

As illustrated in FIGS. 42A and 42B, the image obtained by imaging the phase of the wavenumber 2 can clarify the boundary between the line portion and the space portion as compared with the SEM image according to the related art.

Furthermore, by calculating a phase difference between adjacent pixels and brightening a portion having a large phase difference, the boundary between the line portion and the space portion can be displayed brighter as illustrated in FIG. 42C. The widths of the line portion and the space portion can be measured by using the image illustrated in FIG. 42C.

In the above-described embodiment, an example using the phase of the wavenumber 2 has been described, but the shape may be extracted by performing evaluation in combination with the strength and phase of distribution of another wavenumber or performing arithmetic processing.

In addition, a strength ratio and a phase relationship between wavenumber signals exhibit features for each shape of the sample. Therefore, a database in which a correspondence between the shape of the sample and a signal state of each wavenumber is taken is created, and a wavenumber decomposition result of the acquired signal is collated with the database. As a result, it is possible to determine which shape the observed shape of the sample corresponds to.

For example, in inspection of the semiconductor wafer, a wavenumber signal state when the semiconductor wafer has a normal shape at each coordinate position is recorded in the database. Then, it is possible to extract an error portion of the shape by acquiring a signal from the wafer to be inspected and comparing a difference in wavenumber signal state.

8. Eighth Embodiment

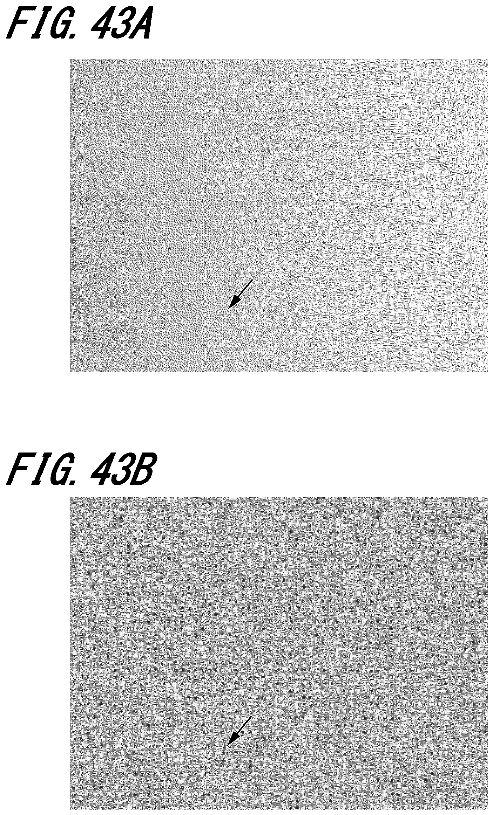

Next, an analysis device according to an eighth embodiment will be described with reference to FIGS. 43A and 43B.

The analysis device according to the eighth embodiment includes a vector field arithmetic unit that calculates a vector field in the analysis device according to the first embodiment. Therefore, portions common to those of the electron microscope 100 according to the first embodiment are denoted by the same reference numerals, and an overlapping description will be omitted.

Here, a complex number F(k) as a wavenumber decomposition result can be expressed by the following Formula 3.

[Formula 3]

$$F(k) = a_k + ib_k$$

Then, the vector field arithmetic unit replaces the complex number F(k) with a vector value $V_k = (a_k, b_k)$. As a result, a result of performing wavenumber decomposition on a signal acquired while scanning can be treated as the vector field. In addition, since a wavenumber component of $k = 1$ determines an inclination of a surface of a sample, a vector field of $V_1$ diverges in the vicinity where the surface of the sample protrudes and converges in the vicinity where the surface of the sample is recessed.

Therefore, an unevenness of the surface can be determined by obtaining divergence in vector analysis using the vector field arithmetic unit. Here, the vector field is represented by the following Formula 4.

[Formula 4]

$$V_k = a_k i + b_k j$$

Divergence of the vector field is obtained by $V \cdot V_k$ in Formula 4 above.

However, in the following Formula 5, $V \cdot V_1 > 0$ indicates the protrusion, and $\nabla \cdot V_1 < 0$ indicates the recess.

[Formula 5]

$$\nabla = \frac{\partial}{\partial x} i + \frac{\partial}{\partial y} j$$

When observing a cross section of the sample is observed, there is a possibility that foreign matter such as dust is attached to the surface before the sample is set in the SEM even if the sample is subjected to pretreatment such as surface polishing and observed. In addition, there is a problem that it is difficult to distinguish the foreign matter and an original structure of the sample when observing the sample with the SEM image.

Here, since the foreign matter placed on the surface has a shape protruding from a flat surface, $\nabla \cdot V_1 > 0$. In addition, $\nabla \cdot V_1 \leq 0$ in a case of contrast or a hole of the sample. As a result, it is possible to distinguish the foreign substance and the original structure of the sample by obtaining $\nabla \cdot V_1$.

FIG. 43A is an SEM image of the surface of the semiconductor wafer observed. As illustrated in FIG. 43A, although dotted contrast can be confirmed, it is difficult to determine whether the contrast is a defect or dust of the wafer.

FIG. 43B is an image obtained by calculating divergence of a vector of a signal of a wavenumber k = 1 and using the divergence as a brightness. As illustrated in FIG. 43B, a bright point and a dark point are seen. The divergence of the vector field is a positive value, and convergence is a negative value. Therefore, the bright point indicates the protrusion and can be determined to be the foreign matter attached to the surface of the semiconductor wafer. The dark point can be determined to be a defect of the wafer.

In addition, a portion indicated by an arrow in FIG. 43A is not visible in the SEM image, but can be seen as a black point in FIG. 43B. That is, it can be confirmed that a small hole, which is difficult to distinguish in the SEM image according to the related art, is formed at the arrow portion. As described above, with the analysis device according to the eighth embodiment, it is possible to extract even a shape that is difficult to have contrast.

9. Ninth Embodiment

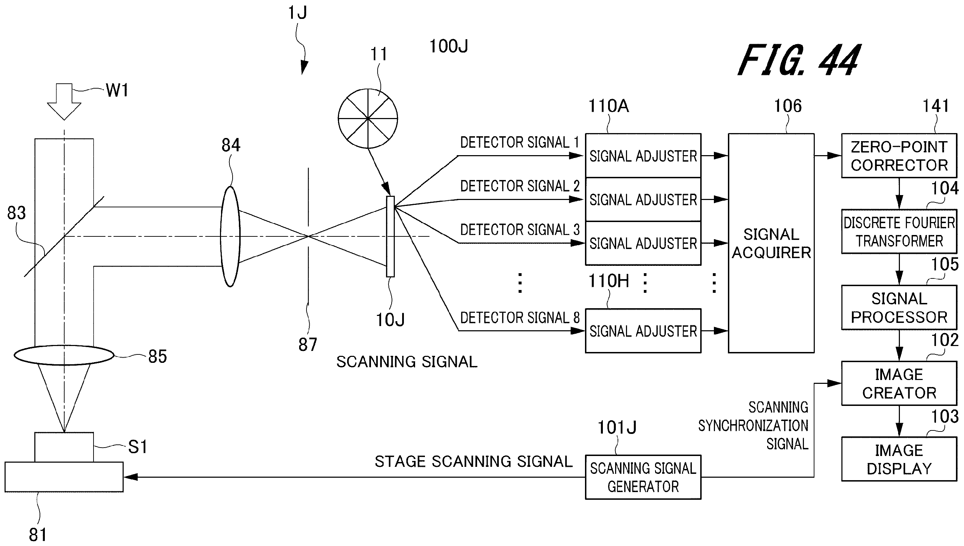

Next, an analysis device according to a ninth embodiment will be described with reference to FIG. 44.

FIG. 44 is a diagram illustrating the analysis device according to the ninth embodiment.

The analysis device according to the ninth embodiment is different from the analysis device according to the first embodiment in a configuration of a lens barrel. Therefore, here, portions common to those of the analysis device according to the first embodiment are denoted by the same reference numerals, and an overlapping description will be omitted.

An analysis device 100J according to the ninth embodiment illustrated in FIG. 44 is a scanning optical microscope that irradiates a sample with light as an example of the primary beam and observes reflected light that is an example of the secondary beam reflected from the sample. As illustrated in FIG. 44, the analysis device 100J includes a lens barrel 1J, a scanning signal generator 101J, an image creator 102, an image display 103, a signal processor 105, a discrete Fourier transformer 104, a signal acquirer 106, a plurality of signal adjusters 110A to 110H, a zero-point corrector 141, and a stage 81. The image creator 102, the image display 103, the signal processor 105, the discrete Fourier transformer 104, the signal acquirer 106, and the plurality of signal adjusters 110A to 110H are similar to those of the electron microscope 100 according to the first embodiment, and thus a description thereof will be omitted.

The zero-point corrector 141 performs zero-point correction on a signal acquired by the signal acquirer 106. That is, the zero-point corrector 141 corrects a value in a state where no signal is detected by a photodetector 10J described below to be 0. Specifically, the zero-point corrector 141 calculates an offset amount applied to the acquired signal based on an offset amount of an amplifier itself with respect to the value of the acquired signal and an offset voltage value applied to the signal itself. Then, the zero-point corrector 141 removes an offset from the acquired signal. In addition, in a case where there is a mechanism that can adjust a signal amount in a state where light is not incident on the photodetector 10J to 0 in the signal acquirer 106, the signal amount may be adjusted using the mechanism. Alternatively, the amount of offset adjustment by the signal adjusters 110A to 110H may be grasped, and a zero point may be calculated from the obtained signal amount and the amount of offset adjustment and reflected in the signal amount.

The above-described zero-point corrector 141 may also be provided in the above-described analysis devices (electron microscopes) 100 according to the first to eighth embodiments.

A sample S1 is disposed on the stage 81. The stage 81 is configured to be movable in a direction (X direction and Y direction) orthogonal to an optical axis of light W1 emitted from the lens barrel 1J described below.

The stage 81 is connected to the scanning signal generator 101J. Then, the stage 81 is driven based on a stage scanning signal from the scanning signal generator 101J, and moves in the X direction and the Y direction. Therefore, the sample S1 disposed on the stage 81 also moves in the X direction and the Y direction. Thus, the light W1 with which the sample S1 is irradiated can be scanned on the sample S1.

The lens barrel 1J includes a light source (not illustrated) that emits the light W1 as an example of the primary beam, an objective lens 85, a half mirror 83, an imaging lens 84, a diaphragm 87, and the photodetector 10J that is an example of the detection unit. The half mirror 83 transmits the light W1 emitted from the light source and reflects light reflected (scattered) from the sample S1.

The objective lens 85 is disposed between the half mirror 83 and the stage 81. The objective lens 85 is a lens for forming an image of the light W1 transmitted through the half mirror 83 on the sample S1. The sample S1 is irradiated with the light W1 having passed through the objective lens 85. Then, the light W1 is reflected by the surface of the sample S1, passes through the objective lens 85 again, and is directed to the half mirror 83.

The imaging lens 84 is disposed between the half mirror 83 and the photodetector 10J. The imaging lens 84 collects the light W1 reflected by the sample S1 and reflected by the half mirror 83. The diaphragm 87 is disposed between the imaging lens 84 and the photodetector 10J.

A focal point of the imaging lens 84 is set at an opening of the diaphragm 87. Light that has passed through the opening of the diaphragm 78 reaches the photodetector 10J. The photodetector 10J receives the light.

The photodetector 10J is a segmented detector in which a detection surface for detecting light is segmented into a plurality of segments (detection regions) 11 (eight segments in the present embodiment). The photodetector 10J is formed in a disk shape. The plurality of segments 11 are arranged rotationally symmetrically with respect to the center of the photodetector 10J, that is, the optical axis of the light. That is, the plurality of segments 11 are arranged at equal angular intervals in a circumferential direction of the photodetector 10J. In addition, it is preferable that the plurality of segments 11 have the same shape and have the same detection characteristics. In such a photodetector 10J, in a case where emitted light reflected from the sample S1 has an equal strength in all directions, the plurality of segments 11 each independently detect the reflected light and output detector signals 1 to 8 to the signal adjusters 110A to 110H.

Here, the light W1 is scattered (reflected) most in a specular reflection direction with respect to the surface of the sample S1. Therefore, the photodetector 10J acquires scattered light strength distribution in an angular direction. As described above, in the photodetector 10J, the detection surface that detects light is segmented and arranged in a rotation angle direction with respect to the optical axis. As a result, when the surface of the sample S1 is inclined, the strength increases in a segment 11 corresponding to an inclination direction. Therefore, the signal strength distribution obtained from the plurality of segments 11 has a strength difference similar to that described in the above-described embodiment, and can be analyzed by a similar method. As a result, the analysis device 100J illustrated in FIG. 44 can also extract information such as the shape of the sample S1.

The other configurations are similar to those of the analysis device (electron microscope) 100 according to the first embodiment described above, and thus a description thereof will be omitted. It is possible to obtain the same operation and effect as those of the analysis device 100 according to the first embodiment described above also with the analysis device 100J according to the ninth embodiment.

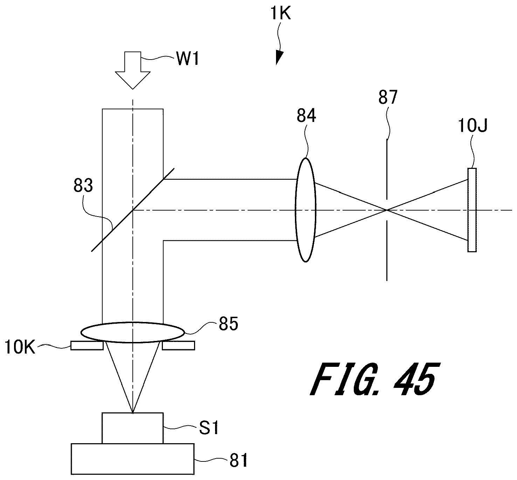

FIG. 45 is a diagram illustrating a modification of the lens barrel of the analysis device 100J according to the ninth embodiment.

A lens barrel 1K illustrated in FIG. 45 includes a second photodetector 10K in addition to the components of the lens barrel 1J of the analysis device 100J according to the ninth embodiment. The second photodetector 10K is disposed between a stage 81 and an objective lens 85. Similarly to the electron detector 10 according to the first embodiment, the second photodetector 10K is a segmented detector in which a detection surface for detecting light is segmented into a plurality of segments. In addition, an opening through which the light W1 incident on the sample S1 can pass is formed at the center of the second photodetector 10K in a radial direction. The second photodetector 10K detects light scattered by the sample S1 and acquires scattered light strength distribution in an angular direction.

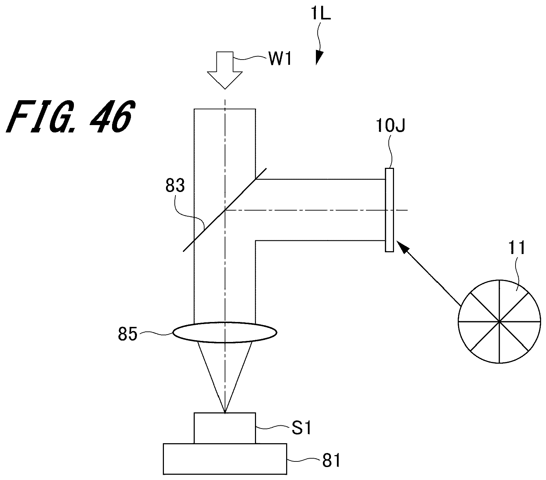

FIG. 46 is a diagram illustrating a modification of the lens barrel of the analysis device 100J according to the ninth embodiment.

A lens barrel 1L illustrated in FIG. 46 has a configuration in which the diaphragm 87 and the imaging lens 84 are removed from the lens barrel 1J of the analysis device 100J according to the ninth embodiment. That is, in the lens barrel 1L according to the modification, scattered light is detected by a photodetector 10J without being collected by the imaging lens 84 or the like. The analysis device including the lens barrel 1L according to the modification can also obtain the same operation and effect as those of the analysis device 100J according to the ninth embodiment described above.

In addition, when the sample S1 is sliced and can transmit the light W1, the photodetector 10J may be disposed below the sample S1 along the optical axis of the light W1, similarly to the scanning transmission electron microscope (STEM) 100F which is the analysis device according to the sixth embodiment. As a result, signal strength distribution of the light transmitted through the sample S1 and scattered can be acquired and analyzed.

10. Tenth Embodiment

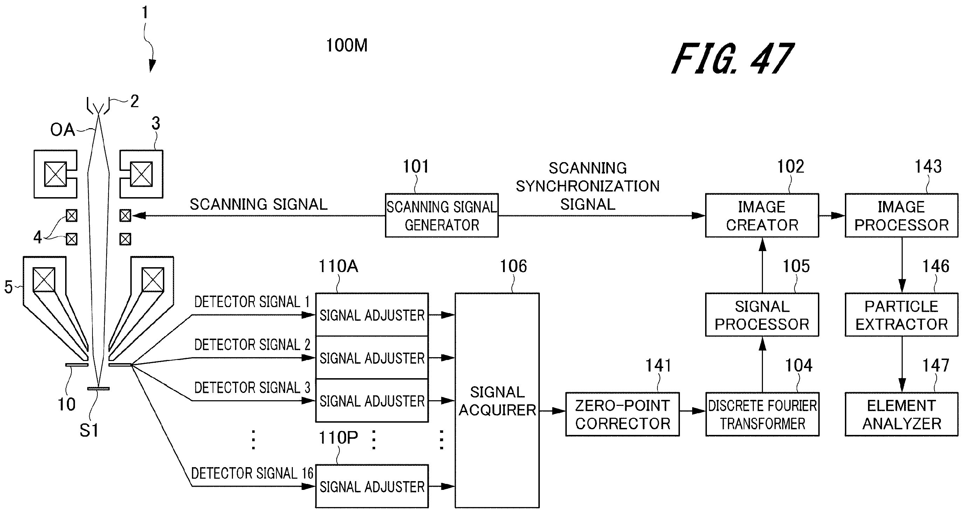

Next, an analysis device according to a tenth embodiment will be described with reference to FIGS. 47 to 57.

FIG. 47 is a diagram illustrating the analysis device according to the tenth embodiment.

An analysis device 100M according to the tenth embodiment is different from the analysis device 100 according to the first embodiment in that a particle detector and an element analyzer for extracting and analyzing a particle included in a sample S1 are provided. Therefore, here, portions common to those of the analysis device according to the first embodiment are denoted by the same reference numerals, and an overlapping description will be omitted.

The analysis device 100M according to the tenth embodiment illustrated in FIG. 47 includes a lens barrel 1, a scanning signal generator 101, an image creator 102, an image processor 143, a signal processor 105, a discrete Fourier transformer 104, a signal acquirer 106, a plurality of signal adjusters 110A to 110P, and a zero-point corrector 141. Configurations of the image creator 102, the signal processor 105, the discrete Fourier transformer 104, the signal acquirer 106, and the plurality of signal adjusters 110A to 110P are similar to those of the electron microscope 100 according to the first embodiment, and thus a description thereof will be omitted. Since a configuration of the zero-point corrector 141 is similar to that of the zero-point corrector 141 according to the ninth embodiment, a description thereof will be omitted.

The analysis device 100M includes a particle extractor 146 and an element analyzer 147. The particle extractor 146 extracts a particle from an image subjected to image processing by the image processor 143. The element analyzer 147 analyzes an element of the particle extracted by the particle extractor 146. Further, the element analyzer 147 detects characteristic X-rays generated by electron beam irradiation in an electron detector 10 using, for example, energy dispersive X-ray spectroscopy, and obtains element information of the sample and foreign matter.

Here, as illustrated in FIGS. 23A to 23C described above, when an inclusion S11 is precipitated in a base material S12 of the sample S1, the base material S12 and the inclusion S11 are different from each other in constituent molecules and densities thereof. Therefore, at a boundary between the inclusion S11 and the base material S12, there is a difference in probability that the electrons are scattered. As described above, even if there is no unevenness on the surface of the sample S1, a signal difference occurs for the signal detected by the electron detector 10 in the vicinity of the boundary of the inclusion S11. Thus, an outline of the particle included in the sample S1 can be extracted by using a signal component of a wavenumber 1.

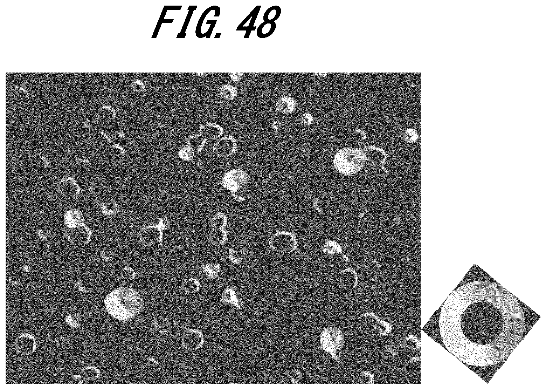

FIGS. 48 to 54 are views illustrating images subjected to image processing by the image creator 102 and the image processor 143.

FIG. 48 is an image created by the discrete Fourier transformer 104 performing wavenumber decomposition on obtained signal strength distribution and the image creator 102 applying a signal of the wavenumber 1 to an HSV color space. The example illustrated in FIG. 48 is an example of observing a cross section of a steel sample as the sample S1, and it can be seen that various elements are aggregated using iron as a base material.

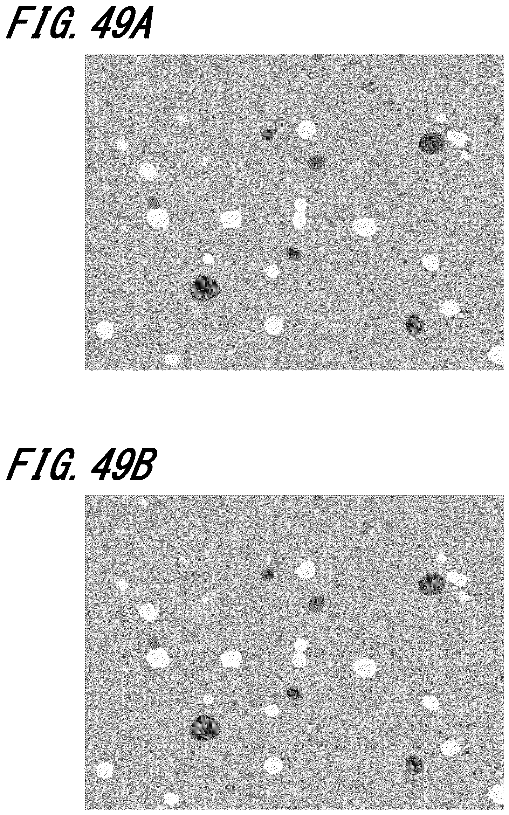

FIG. 49A is a composition image acquired at an acceleration voltage of 3 kV, and FIG. 49B is a composition image acquired at an acceleration voltage of 15 kV. The images illustrated in FIGS. 49A and 49B are images of the same field of view. As illustrated in FIGS. 49A and 49B, a particle that can be clearly observed at an acceleration voltage of 3 kV has reduced contrast at an acceleration voltage of 15 kV. Therefore, in the SEM image illustrated in FIG. 49A, it is difficult to extract a particle by simple image processing such as binarization processing.

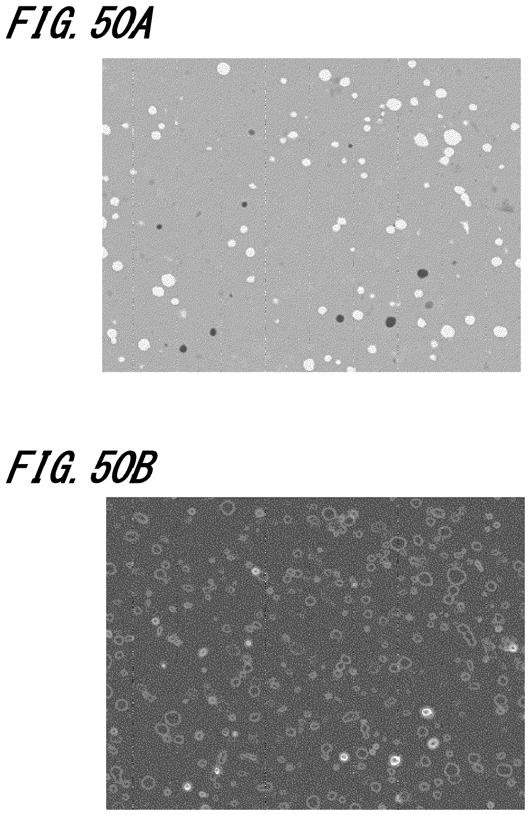

FIG. 50A is a backscattered electron image acquired at an acceleration voltage of 15 kV, and FIG. 50B is an image obtained by creating the backscattered electron image illustrated in FIG. 50A with a strength of the wavenumber 1. As illustrated in FIG. 50B, it can be seen that, in the image created with the wavenumber 1 of a backscattered electron signal, the particle is easily visible even with a signal acquired at 15 kV. This makes it possible to extract a particle that is difficult to extract even at a relatively high acceleration voltage by using the signal of the wavenumber 1. As a result, the position of a particle can be specified in the SEM image while keeping a high acceleration voltage, and element analysis can be performed by the element analyzer 147 without changing an irradiation condition of the electron beam.

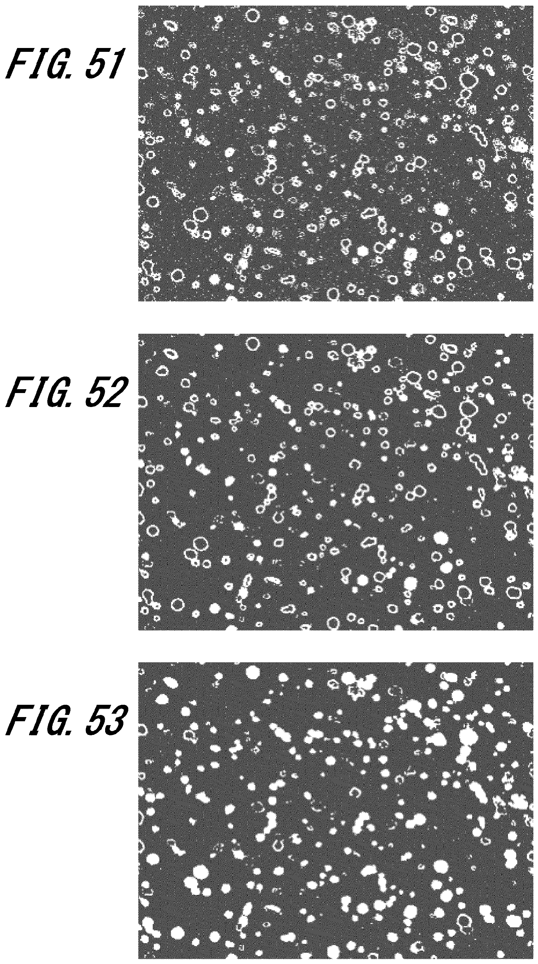

Next, a particle extraction processing operation will be described with reference to FIGS. 51 to 54.

FIGS. 51 to 54 are images illustrating the particle extraction processing operation.

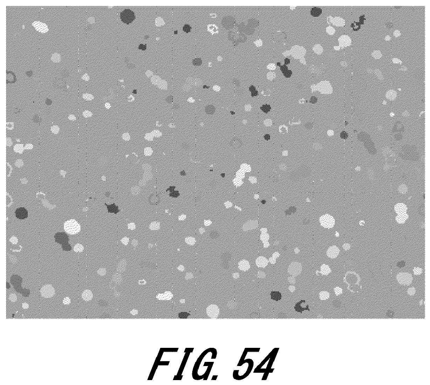

FIG. 51 is an image obtained by binarizing the image illustrated in FIG. 50B. FIG. 52 is an image obtained by performing median filtering processing on the image illustrated in FIG. 51. FIG. 53 is an image obtained by performing outline extraction processing on the image illustrated in FIG. 52. FIG. 54 is an image obtained by performing labeling processing on the image illustrated in FIG. 53.

The image processor 143 binarizes an image created with the strength of the wavenumber 1. As a result, contrast can be made clear as illustrated in FIG. 51. Next, the image processor 143 performs the median filtering processing on the image illustrated in FIG. 51. As a result, an image from which noise has been removed can be acquired as illustrated in FIG. 52.

Here, as described above, the signal strength appearing at the boundary varies depending on the magnitude of a compositional difference. Therefore, as the compositional difference is larger, a stronger signal appears at the outline of the particle, so that the outline of the signal strength is thicker. On the other hand, when the compositional difference is small, the outline is thin. Therefore, depending on the type of the particle, some particles may appear as if the entire particle is filled in due to the thick outline, and some particles appear in a ring shape. Both types of particles are present here and all particles need to appear as if the entire particles are filled in for later labeling processing. Therefore, the image processor 143 individually extracts regions with a high intensity (outline extraction) and fills the inside of each outline. As a result, as illustrated in FIG. 53, the ring-shaped particles can be filled in, and the outline can be extracted.

Next, as illustrated in FIG. 54, the image processor 143 performs the labeling processing on the image illustrated in FIG. 53 to assign a label number to each of connection regions. Thus, all particles can be numbered. As a result, the particle can be extracted by the particle extractor 146 from the image illustrated in FIG. 54.

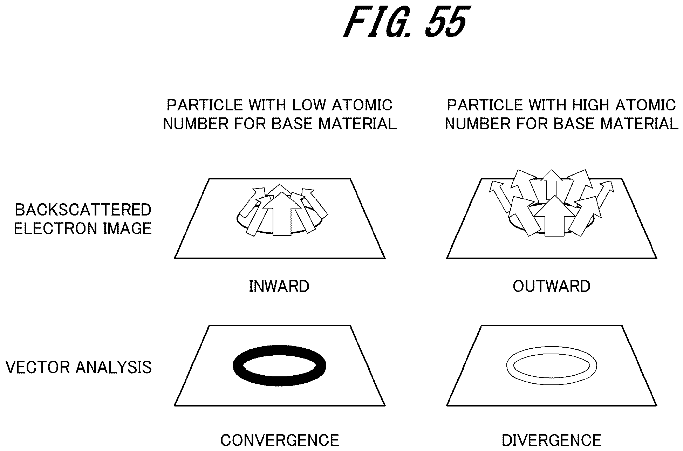

Next, processing for extracting only a lighter particle or only a heavier particle than the base material will be described with reference to FIG. 55.

FIG. 55 is an explanatory diagram illustrating a weight of a composition and an orientation of a vector.

As described above, the signal of the wavenumber 1 shows a bias toward the particle when the particle has a lighter element than the base material. Then, when the element is heavier than the base material, the signal shows a bias toward the base material. That is, when the signal of the wavenumber 1 is replaced with a vector with magnitude and orientation, the orientation of the vector of the boundary becomes inward or outward depending on the weight of the particle as illustrated in FIG. 55. That is, a vector of a backscattered electron image of a particle with a lower atomic number (lighter) than the base material is inward. A vector of a backscattered electron image of a particle with a higher atomic number (heavier) than the base material is outward.

Using this, the element analyzer 147 performs vector analysis to acquire an image. Then, as illustrated in FIG. 55, the intensity is set to be low in a case where the vector converges, and the intensity is set to be high in a case where the vector diverges. As a result, the element analyzer 147 can determine the weight of the particle, and analyze the particle.

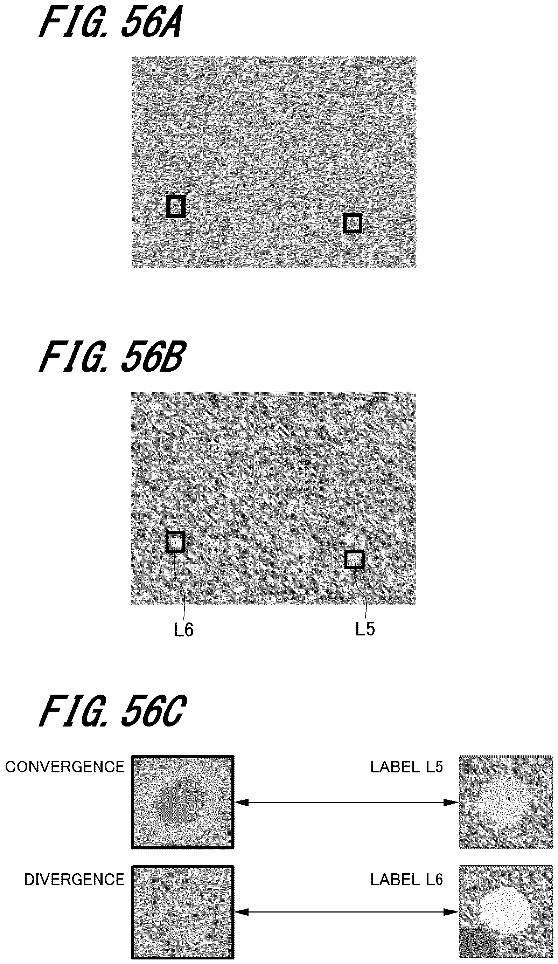

FIGS. 56A to 56C are explanatory views for determining the weight of the particle from a vector analysis image and a label image.

FIG. 56A illustrates the vector analysis image processed so as to display a portion where the vector converges to be dark and a portion where the vector diverges to be bright, and FIG. 56B illustrates an image subjected to the labeling processing.

By comparing FIGS. 56A and 56B, only the lighter particle and the heavier particle can be extracted from the labeled particles. For example, as illustrated in FIG. 56C, an intensity value of the same coordinates is determined in the vector analysis image for position coordinates of a labeled pixel as a result of the labeling processing.

For example, a particle to which a "label L5" is assigned can be determined to converge due to the low intensity value (dark). Therefore, the particle to which the "label L5" is assigned can be understood to be a particle having a lower atomic number than the base material. On the other hand, since a particle to which a "label L6" is assigned can be determined to diverge due to the high intensity value (bright). Therefore, the particle to which the "label L6" is assigned can be understood to be a particle having a higher atomic number than the base material.

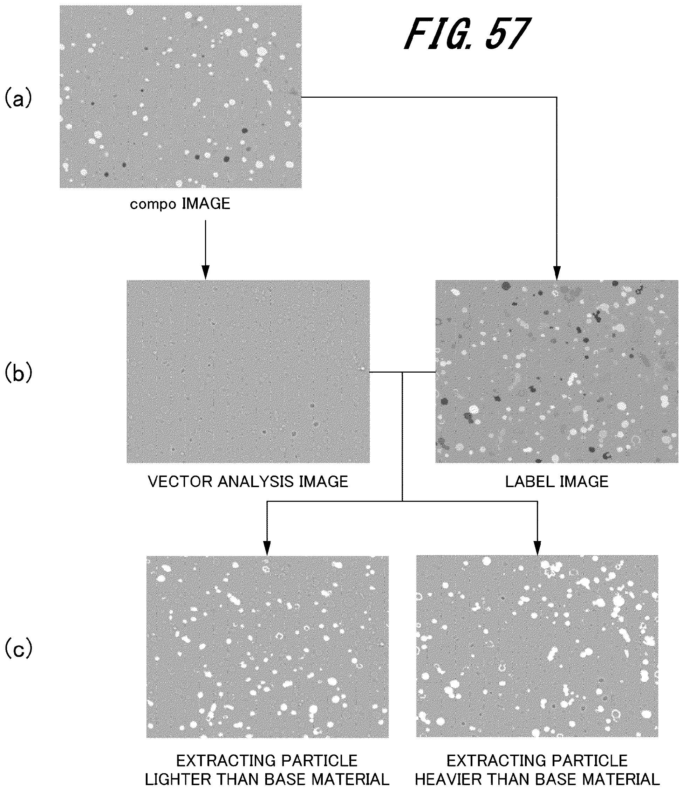

FIGS. 57A to 57C are views illustrating processing of classifying the weight of the particle included in the base material.

As illustrated in FIG. 57A, the image creator 102 creates the backscattered electron image with the strength of the wavenumber 1. Next, the image processor 143 performs vector analysis based on the signal strength and creates a vector analysis image illustrated in FIG. 57B. In addition, the image processor 143 performs the labeling processing on the image illustrated in FIG. 57A to create a label image illustrated in FIG. 57B.

Next, the particle extractor 146 extracts a particle from the vector analysis image and the label image illustrated in FIG. 57B. Then, the particle extractor 146 determines whether the extracted particle is lighter or heavier than the base material. Then, as illustrated in FIG. 57C, an image obtained by extracting only a particle lighter than the base material and an image obtained by extracting only a particle heavier than the base material can be separated.

As described above, the element analysis in the element analyzer 147 can be efficiently performed by screening (separating) the particles. For example, a $k\alpha$ line of an element Si has a peak at 1.739 keV, and an M line of an element W has a peak at 1.774 keV. When the element analysis is performed on an iron/steel material including the elements, it is difficult to distinguish the iron/steel material because peak positions are close. Further, when the element analysis is performed at a high acceleration voltage, the element Si and the element W can be distinguished from each other by an L line of the element W. However, in measurement at a high acceleration voltage, since a scattering amount region of electrons is widened, analysis of microparticles becomes difficult. In such a case, by determining whether the element is a lighter element or a heavier element than the base material in advance, it can be determined that a heavier particle than iron as the base material is W and a lighter particle is Si among the particles having a peak in the vicinity of 1.7 keV. In this manner, the element included in the particle may be determined by combining a result of determining an atomic weight and a result of the element analyzer 147.

In addition, in a case of a sample whose elements included therein are limited, such as a steel material, a composition can be determined only by whether the element is a lighter element or a heavier element than the base material in some cases. In a case of such a sample, the composition of the particle can be determined without performing the element analysis by the element analyzer 147. As a result, throughput of the particle analysis can be improved by the analysis device 100M.

Furthermore, as described above, a particle extraction result is hardly affected by an irradiation current amount of the electron beam. Here, in a general particle extraction method, the irradiation current of the electron beam is kept constant, and an SEM image is acquired under the same signal acquisition condition such as an amplifier. The acquired image is binarized with a threshold value to extract the particle. Therefore, if the irradiation current amount is not stable, the brightness of the SEM image that can be acquired changes, and the number and size of the particles that can be extracted change. Furthermore, in a case where a filament is replaced, the amount of current to be irradiated is changed, and thus, it is necessary to adjust the amount of current to an appropriate amount each time.

On the other hand, in the analysis device 100M according to the tenth embodiment, a bias of signal distribution observed at the boundary of the composition is extracted. This makes it possible to implement stable particle extraction which is hardly affected by a change in amount of current.

As described above, the method of extracting the particle from the base material by frequency analysis and the method of extracting information regarding the composition have been described. The amount of the backscattered electron signal emitted from the sample varies depending on the element number of the atom included in the sample. Therefore, atoms constituting the particle can also be estimated from the amount of the backscattered electron signal of the particle. For example, a case where it is desired to calculate the content of the particle constituted by specific atoms for a sample in which some atoms are mixed will be described. In this case, when element analysis such as EDS is performed on all particles, there is a problem that it takes time to perform analysis.

The amount of the backscattered electron signal changes according to the atomic number. Therefore, if the irradiation condition of the electron beam is constant, the amount of the backscattered electron signal of the atom to be examined is examined in advance, including an error range. Then, for the particles extracted by the above-described method, only a particle corresponding to a signal amount to be examined can be extracted from the amount of the backscattered electron signal in the region.

As described above, if the irradiation current amount is not stable, correct measurement cannot be performed by this method, and it is necessary to adjust the irradiation current amount when the filament is replaced. A bias of the backscattered electrons at the boundary between the base material and the particle is hardly affected by the irradiation current amount. Therefore, with the analysis device 100M according to the tenth embodiment, the particle and the base material can be separated even if the irradiation current amount or a sensitivity of the detector fluctuates. Furthermore, a backscattered electron signal amount ratio between the base material and the particle is constant even when the irradiation current amount or detection sensitivity in the detector fluctuates.

In addition, when the base material is known to be Fe as in a case of a steel material or the like, the composition of the particle can be estimated by calculating a ratio between the amount of the backscattered electron signal of the particle to the amount of the backscattered electron signal of the base material. Thus, the composition of the particle can be determined without performing EDS analysis. In addition, in a case of a sample including particles with similar atomic numbers and of which the composition is difficult to distinguish only by the amount of the backscattered electron signal, it is sufficient if EDS analysis is performed only on particles corresponding to the signal amount. As a result, the number of particles to be subjected to the EDS analysis can be reduced, and the total analysis time can be shortened.

In addition, in the analysis device 100M according to the tenth embodiment, processings such as a noise removal method and image sharpening may be performed in combination. As a result, even with a signal acquired by relatively fast scanning, noise of data after frequency analysis is reduced, and an effect that particles are easily extracted can be obtained. In addition, as the noise removal method, various other noise removal methods such as image processing, AI processing, and compression sensing can be applied.

The other configurations are similar to those of the analysis device 100 according to the first embodiment described above, and thus a description thereof will be omitted. It is possible to obtain the same operation and effect as those of the analysis device 100 according to the first embodiment described above also with the analysis device 100M according to the tenth embodiment.

11. Eleventh Embodiment

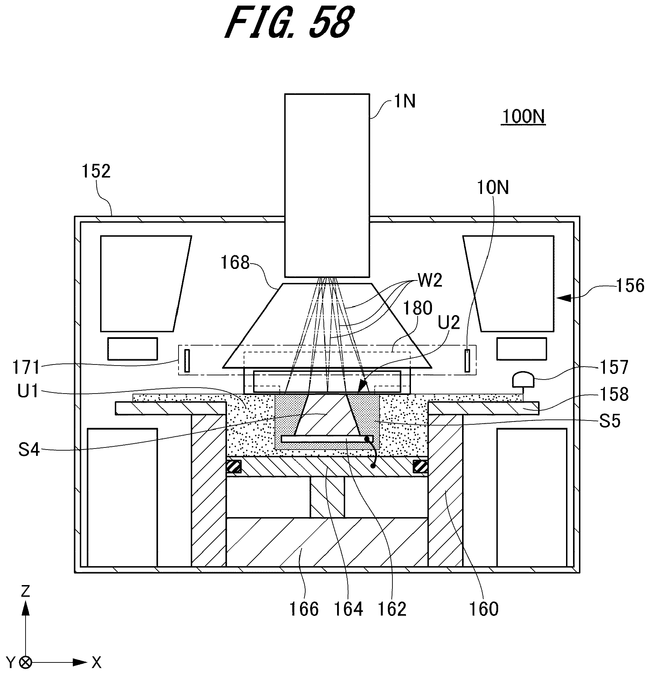

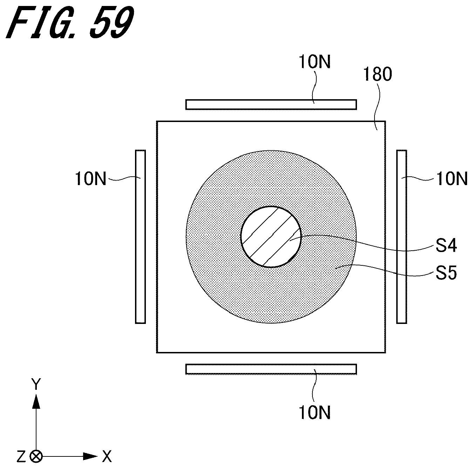

Next, an analysis device according to an eleventh embodiment will be described with reference to FIGS. 58 and 59.

FIG. 58 is a schematic cross-sectional view schematically illustrating a three-dimensional powder bed fusion additive manufacturing (PBF-AM) apparatus using the analysis device according to the eleventh embodiment. FIG. 59 is a plan view illustrating a position of an electron detector.

The analysis device according to the eleventh embodiment is used in the three-dimensional PBF-AM apparatus. Therefore, here, portions common to those of the analysis device 100 according to the first embodiment are denoted by the same reference numerals, and an overlapping description will be omitted.

A three-dimensional PBF-AM apparatus 100N illustrated in FIG. 58 is an apparatus that irradiates a powder material made of metal powder such as titanium, aluminum, or iron with an electron beam to melt the powder material, and stacks layers in which the powder material is solidified to manufacture a three-dimensional object.

As illustrated in FIG. 58, the three-dimensional PBF-AM apparatus 100N includes a vacuum chamber 152, a beam irradiation device 1N, a powder supply device 156, a build table 158, and a build box 160. The three-dimensional PBF-AM apparatus 100N further includes a build plate 162, an inner base 164, a plate moving device 166, a radiation shield cover 168, and an electron shield 180 that is an example of a shielding member. The three-dimensional PBF-AM apparatus 100N further includes a plurality of electron detectors 10N that detect backscattered electrons, and a support bracket 171 that supports the electron detectors 10N.

The vacuum chamber 152 is a chamber for making a vacuum state by evacuating air in the chamber by a vacuum pump (not illustrated). The vacuum chamber 152 houses the powder supply device 156, the build table 158, the build box 160, the build plate 162, the inner base 164, the plate moving device 166, the radiation shield cover 168, the electron shield 180, the electron detectors 10N, and the support bracket 171.

The beam irradiation device 1N is a device that irradiates the build plate 162 or a manufactured surface U2 of a powder layer formed of a powder material U1 with an electron beam W2. The manufactured surface U2 corresponds to an upper surface of the powder layer. A state of the powder layer changes as a three-dimensional PBF-AM process proceeds. Although not illustrated, the beam irradiation device 1N includes an electron gun that is a generation source of the electron beam W2, a focusing lens that focuses the electron beam generated by the electron gun, and a deflection lens that deflects the electron beam W2 focused by the focusing lens. The focusing lens is implemented using a focusing coil, and focuses the electron beam W2 by a magnetic field generated by the focusing coil. The deflection lens is implemented using a deflection coil, and deflects the electron beam W2 by a magnetic field generated by the deflection coil.

The powder supply device 156 is a device that supplies the powder material U1 onto the build plate 162 to form the powder layer as an example of the powder material to be a raw material of a manufactured object S4. The powder supply device 156 includes a hopper, a powder dropping device, and a squeegee 157. The squeegee 157 is an elongated member long in the Y direction, and includes a blade for spreading powder.

The build table 158 is horizontally arranged inside the vacuum chamber 152. The build table 158 is disposed below the powder supply device 156. A central portion of the build table 158 is opened. An opening shape of the build table 158 is a circle in plan view or a square in plan view (for example, a quadrangle in plan view).

The build box 160 is a box that forms a space for manufacturing. An upper end portion of the build box 160 is connected to an opening edge of the build table 158. A lower end portion of the build box 160 is connected to a bottom wall of the vacuum chamber 152.

The build plate 162 is a plate for forming the manufactured object S4 by using the powder material U1. The manufactured object S4 is formed by being stacked on the build plate 162. The build plate 162 is formed in a circular shape in plan view or a square shape in plan view in accordance with the opening shape of the build table 158. The build plate 162 is connected (grounded) to the inner base 164 by a ground wire so as not to be in an electrically floating state. The inner base 164 is held at a ground (GND) potential. The powder material U1 is spread over the build plate 162 and the inner base 164.

The inner base 164 is provided to be movable in an up-down direction (Z direction). The build plate 162 moves in the up-down direction integrally with the inner base 164. The inner base 164 has a larger outer dimension than the build plate 162. The inner base 164 slides in the up-down direction along an inner surface of the build box 160.

The plate moving device 166 is a device that moves the build plate 162 and the inner base 164 in the up-down direction.

The radiation shield cover 168 is disposed between the build plate 162 and the beam irradiation device 1N in the Z direction. The radiation shield cover 168 is made of metal such as stainless steel. The radiation shield cover 168 shields radiation heat generated when the powder material U1 is irradiated with the electron beam W2 by the beam irradiation device 1N. When the powder material U1 is irradiated with the electron beam W2 in order to mainly sinter the powder material U1, the powder material U1 is melted. At this time, when heat radiated from the manufactured surface U2 of the powder layer, that is, radiant heat is widely diffused into the vacuum chamber 152, thermal efficiency is deteriorated. On the other hand, when the radiation shield cover 168 is disposed above the build plate 162, the heat radiated from the manufactured surface U2 is shielded by the radiation shield cover 168, and the shielded heat is reflected by the radiation shield cover 168 and returned to the build plate 162 side. Therefore, the heat generated by irradiation with the electron beam W2 can be efficiently used.

In addition, the radiation shield cover 168 has a function of suppressing adhesion (vapor deposition) of an evaporation material generated when the powder material U1 is irradiated with the electron beam W2 to an inner wall of the vacuum chamber 152. When the powder material U1 is irradiated with the electron beam W2, a part of the melted metal becomes an atomized evaporation material and rises from the manufactured surface U2. The radiation shield cover 168 is arranged so as to cover the space above the manufactured surface U2 so that the evaporation material does not diffuse into the vacuum chamber 152.

In forming the manufactured object S4, the electron shield 180 is arranged to cover an upper surface of the powder material U1, that is, the manufactured surface U2. The electron shield 180 is disposed below the radiation shield cover 168. The electron shield 180 is made of metal having a melting point higher than that of the powder material U1 used as a raw material of the manufactured object S4. The electron shield 180 is made of a material having low reactivity with the powder material U1. As a constituent material of the electron shield 180, for example, titanium can be exemplified. The electron shield 180 may be made of metal of the same material as the powder material U1 to be used. The electron shield 180 is electrically grounded to GND. In a preheating step before a sintering step described below, when the powder material U1 is calcined by irradiation with the electron beam W2, the electron shield 180 performs an electrical shielding function to suppress the occurrence of powder scattering to a small scale.

Further, the electron shield 180 is supported so as to be movable up and down in the Z direction which is the vertical direction by a lifting mechanism. The plurality of electron detectors 10N for detecting backscattered electrons are arranged outside the electron shield 180. The plurality of electron detectors 10N are supported by the support bracket 171. The support bracket 171 is disposed at a lower end portion of the radiation shield cover 168 in the Z direction. Further, the support bracket 171 is disposed outside the lower end portion of the radiation shield cover 168 in the X direction and the Y direction, that is, the horizontal direction. Therefore, the plurality of electron detectors 10N are disposed between the radiation shield cover 168 and the manufactured surface U2 of the manufactured object S4 formed on the build plate 162.

The support bracket 171 is disposed above the squeegee 157 in the Z direction. Accordingly, when the squeegee 157 moves in the X direction, interference between the squeegee 157 and the support bracket 171 can be prevented. The support bracket 171 is fixed to the vacuum chamber 152.

As illustrated in FIG. 59, the plurality of electron detectors 10N are arranged so as to surround the manufactured object S4. Here, a calcined region S5 in which the powder material U1 is calcined exists around the manufactured object S4. The plurality of electron detectors 10N are arranged so as to surround the manufactured object S4 and the calcined region S5 with the electron shield 180 interposed therebetween. Thus, a state of the manufactured object S4 can be more accurately detected by arranging the plurality of electron detectors 10N in the vicinity of the manufactured object S4 on a side of the manufactured object S4. The plurality of electron detectors 10N detect the backscattered electrons generated when the manufactured object S4 and the calcined region S5 are irradiated with the electron beam W2.

The number of electron detectors 10N may be five or more.

Detection signals detected by the plurality of electron detectors 10N are output to signal adjusters and adjusted similarly to the analysis device 100 according to the first embodiment described above. Then, arithmetic processing is performed on the plurality of detection signals acquired by the discrete Fourier transformer that is an example of the arithmetic processing unit. Since a method of performing arithmetic processing for the detection signals detected by the plurality of electron detectors 10N is similar to that of the analysis device 100 according to the first embodiment described above, a description thereof will be omitted.

In the three-dimensional PBF-AM apparatus 100N illustrated in FIG. 58, the electron beam W2 is scanned from the beam irradiation device 1N to the calcined region S5 and the manufactured surface U2 of the manufactured object S4 when the powder material U1 is spread, after the powder material U1 is calcined, during sintering, after sintering, or the like. Then, the generated backscattered electrons are detected by the electron detectors 10N, and states of the calcined region S5 and the manufactured surface U2 of the manufactured object S4 are observed. From the result, a supply amount of the powder material U1 and the melting condition are set as necessary, and correction is performed. Thus, not only the number of times the manufacturing of the manufactured object S4 fails can be reduced, but also defects during the manufacturing can be eliminated.

The other configurations are similar to those of the analysis device 100 according to the first embodiment described above, and thus a description thereof will be omitted. It is possible to obtain the same operation and effect as those of the analysis device according to the first embodiment described above also with the three-dimensional PBF-AM apparatus 100N including the analysis device according to the eleventh embodiment.

The present invention is not limited to the embodiments described above and illustrated in the drawings, and various modifications can be made without departing from the gist of the invention described in the claims.

The present invention includes substantially the same configuration (for example, a configuration having the same function, method, and result, or a configuration having the same purpose and effect) as the configurations described in the embodiments. In addition, the present invention includes a configuration in which a non-essential part of the configurations described in the embodiments is replaced. In addition, the present invention includes a configuration that achieves the same operation and effect as those of the configurations described in the embodiments or a configuration that can achieve the same object as that of the configurations described in the embodiments. Reference Signs List

1, 1E, 1F, 1J, 1L Lens barrel
1N Beam irradiation device
2 Electron beam source (irradiation unit)
3 Focusing lens
4 Scanning deflector
5 Objective lens
10, 10B, 10C, 10D, 10E, 10F, 10G, 10N Electron detector (detection unit)
10J, 10K Photodetector (detection unit)
11, 53, 61 Segment (detection region)
19, 59 Opening
21 Semiconductor detection element
22 Insulator
23 Carbon plate
25 Shield
30 High-voltage power supply
31 I-V amplifier
32 Isolation amplifier
41 Phosphor
42 Photodetector
51 Detection element
100, 100E, 100F, 100F, 100J, 100M Electron microscope (analysis device)
100N Three-dimensional powder bed fusion additive manufacturing (PBF-AM) apparatus
101, 101J Scanning signal generator
102 Image creator
103 Image display
104 Discrete Fourier transformer (Fourier transformer and arithmetic processing unit)
105 Signal processor
106 Signal acquirer
110A to 110P, 131 Signal adjuster
121 Target pixel signal detector
122 Arithmetic unit
141 Zero-point corrector
143 Image processor
146 Particle extractor
147 Element analyzer

**Claims**

1. An analysis device (100, 100E, 100F, 100F, 100J, and 100M) comprising:

   an irradiation unit (2) configured to irradiate a sample with a primary beam;
   a detection unit (10, 10B, 10C, 10D, 10E, 10F, 10G, 10N, 10J, and 10K) having a plurality of detection regions (11, 53, and 61) that detect a secondary beam emitted or reflected from the sample irradiated with the primary beam; and
   an arithmetic processing unit (104) configured to perform predetermined arithmetic processing on strength distribution of a plurality of detection signals respectively detected by the plurality of detection regions (11, 53, and 61).

2. The analysis device according to claim 1, wherein the arithmetic processing unit (104) is a Fourier transformer that performs Fourier transform on the strength distribution of the plurality of detection signals.

3. The analysis device according to claim 2, wherein the Fourier transformer performs filtering processing on a wavenumber-decomposed signal, removes a partial signal, and performs inverse Fourier transform on a remaining signal after the removal.

4. The analysis device according to claim 2 or 3, further comprising a determination unit configured to compare a signal obtained by performing Fourier transform by the Fourier transformer or a signal obtained by performing inverse Fourier transform by performing filtering processing on a signal obtained by performing Fourier transform with a signal acquired for each incident position of the primary beam.

5. The analysis device according to claim 2, further comprising a feature extractor configured to extract a signal of a predetermined wavenumber from a signal obtained by performing Fourier-transform by the Fourier transformer and extract a feature on the sample by processing the signal.

6. The analysis device according to claim 2, further comprising a vector field arithmetic unit configured to replace a signal obtained by performing Fourier-transform by the Fourier transformer with a vector value.

7. The analysis device according to claim 1, wherein the plurality of detection regions (11, 53, and 61) are arranged rotationally symmetrically with respect to an optical axis of the primary beam.

8. The analysis device according to claim 1, wherein

the detection unit (10, 10B, 10C, 10D, 10E, 10F, 10G, 10N, 10J, and 10K) includes a plurality of detection elements (51), and
the plurality of detection elements (51) are arranged in a two-dimensional array.

9. The analysis device according to claim 1, wherein the arithmetic processing unit (104) performs predetermined arithmetic processing on strength distribution of a detection signal amount for a signal amount in a state where the sample is not irradiated with the primary beam.

10. The analysis device according to claim 1, wherein the arithmetic processing unit (104) has a function of determining whether the strength distribution of the detection signals is not saturated.

11. The analysis device according to claim 1, further comprising a particle extractor (146) configured to extract a particle included in the sample based on the strength distribution of the detection signals subjected to the predetermined arithmetic processing by the arithmetic processing unit (104).

12. The analysis device according to claim 11, further comprising an image processor (143) configured to perform vector analysis on the strength distribution of the detection signals subjected to the predetermined arithmetic processing by the arithmetic processing unit (104),
wherein the particle extractor (146) determines a weight of the extracted particle with respect to the base material based on the vector analysis performed by the image processor (143).

13. An analysis method comprising:

irradiating a sample with a primary beam;
detecting, by a detection unit (10, 10B, 10C, 10D, 10E, 10F, 10G, 10N, 10J, and 10K) having a plurality of detection regions (11, 53, and 61), a secondary beam emitted or reflected from the sample irradiated with the primary beam; and
performing predetermined arithmetic processing on strength distribution of a plurality of detection signals respectively detected by the plurality of detection regions (11, 53, and 61).

EP 4 474 805 A1

*FIG. 1*

100

1

2

OA

3

SCANNING SIGNAL

SCANNING
SYNCHRONIZATION
SIGNAL

101

SCANNING SIGNAL
GENERATOR

102

IMAGE
CREATOR

103

IMAGE
DISPLAY

4

5

10

S1

DETECTOR SIGNAL 1

110A

SIGNAL ADJUSTER

DETECTOR SIGNAL 2

SIGNAL ADJUSTER

DETECTOR SIGNAL 3

SIGNAL ADJUSTER

110P

DETECTOR SIGNAL 16

SIGNAL ADJUSTER

106

SIGNAL
ACQUIRER

104

DISCRETE FOURIER
TRANSFORMER

105

SIGNAL
PROCESSOR

31

# FIG. 2

# FIG. 3

FIG. 4

# FIG. 5

FIG. 6A

FIG. 6B

FIG. 7

FIG. 8

# FIG. 9

## FIG. 10A

S1

S3

## FIG. 10B

S3

S1

S5

S1

## FIG. 11

## FIG. 12

## FIG. 13

## FIG. 14A

P2
P3
P1
P4

## FIG. 14B

P2
P3
P1
P4

P2
P3
P1
P4

FIG. 15

## FIG. 16A

## FIG. 16B

FIG. 17

## FIG. 18

## FIG. 19

FIG. 20

EP 4 474 805 A1

## FIG. 21

**FIG. 22**

S1

*FIG. 23A*

S11

S12

S1

*FIG. 23B*

S11

S12

SMALL AMOUNT          LARGE AMOUNT

S1

*FIG. 23C*

S11

S12

FIG. 24

FIG. 25

*FIG. 26*

*FIG. 27*

L1

L2

L3

FIG. 28

L4

FIG. 29

FIG. 30A

FIG. 30B

FIG. 31

FIG. 32

FIG. 33

# FIG. 34

# FIG. 35

FIG. 36

SCANNING SIGNAL

101
SCANNING SIGNAL GENERATOR

SCANNING SYNCHRONIZATION SIGNAL

102
IMAGE CREATOR

103
IMAGE DISPLAY

SEGMENT 1 SIGNAL → SIGNAL ADJUSTER →
SEGMENT 2 SIGNAL → SIGNAL ADJUSTER →
SEGMENT 3 SIGNAL → SIGNAL ADJUSTER →
⋮ 131 ⋮
SEGMENT 24 SIGNAL → SIGNAL ADJUSTER →

106
SIGNAL ACQUIRER

104
DISCRETE FOURIER TRANSFORMER

105
SIGNAL PROCESSOR

1F
100F

2
3
4
5
S1
10F

EP 4 474 805 A1

FIG. 37

10F

61

FIG. 38

10G

62

61

*FIG. 39*

*FIG. 40*

# FIG. 41

FIG. 42A

FIG. 42B

FIG. 42C

## FIG. 43A

## FIG. 43B

**FIG. 44**

1K

W1

87

84

10J

83

85

10K

S1

81

*FIG. 45*

FIG. 46

1L

W1

10J

83

11

85

S1

81

FIG. 47

EP 4 474 805 A1

# FIG. 48

*FIG. 49A*

*FIG. 49B*

*FIG. 50A*

*FIG. 50B*

FIG. 51

FIG. 52

FIG. 53

FIG. 54

# FIG. 55

PARTICLE WITH LOW ATOMIC
NUMBER FOR BASE MATERIAL

PARTICLE WITH HIGH ATOMIC
NUMBER FOR BASE MATERIAL

BACKSCATTERED
ELECTRON IMAGE

INWARD

OUTWARD

VECTOR ANALYSIS

CONVERGENCE

DIVERGENCE

## FIG. 56A

## FIG. 56B

L6                    L5

## FIG. 56C

CONVERGENCE                    LABEL L5

DIVERGENCE                    LABEL L6

*FIG. 57*

(a)

compo IMAGE

(b)

VECTOR ANALYSIS IMAGE                    LABEL IMAGE

(c)

EXTRACTING PARTICLE                    EXTRACTING PARTICLE
LIGHTER THAN BASE MATERIAL    HEAVIER THAN BASE MATERIAL

# FIG. 58

FIG. 59

Europäisches
Patentamt

European
Patent Office

Office européen
des brevets

# EUROPEAN SEARCH REPORT

**Application Number**

EP 24 17 5508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/149188 A1 (HITACHI HIGH TECH CORP [JP]) 29 July 2021 (2021-07-29) * paragraph [0012] - paragraph [0035]; figures * | 1-13 | INV. G01N23/2251 |
| X | EP 3 506 332 A1 (JEOL LTD [JP]) 3 July 2019 (2019-07-03) | 1,2,7-13 | |
| A | * paragraph [0021] - paragraph [0024]; figures * * paragraph [0037] - paragraph [0041] * * paragraph [0050] * * paragraph [0057] - paragraph [0063] * * paragraph [0192] * | 3-6 | |
| X | JP 2005 101619 A (HITACHI LTD) 14 April 2005 (2005-04-14) | 1,13 | |
| A | * paragraphs [0003], [0057]; figures * | 2-12 | |

**TECHNICAL FIELDS SEARCHED (IPC)**

G01N

The present search report has been drawn up for all claims

| Place of search | Date of completion of the search | Examiner |
|---|---|---|
| The Hague | 4 November 2024 | Savage, John |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 5508

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2024

| Patent document cited in search report | | Publication date | Patent family member(s) | | Publication date |
|---|---|---|---|---|---|
| WO 2021149188 | A1 | 29-07-2021 | JP | 7336540 B2 | 31-08-2023 |
| | | | JP | WO2021149188 A1 | 29-07-2021 |
| | | | KR | 20220103140 A | 21-07-2022 |
| | | | TW | 202129685 A | 01-08-2021 |
| | | | US | 2024297012 A1 | 05-09-2024 |
| | | | WO | 2021149188 A1 | 29-07-2021 |
| EP 3506332 | A1 | 03-07-2019 | EP | 3506332 A1 | 03-07-2019 |
| | | | US | 2019204245 A1 | 04-07-2019 |
| JP 2005101619 | A | 14-04-2005 | JP | 4028864 B2 | 26-12-2007 |
| | | | JP | 2005101619 A | 14-04-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019121588 A